# EUROPEAN PATENT APPLICATION

(11) **EP 4 507 359 A1**
(43) Date of publication of application: **12.02.2025**
(21) Application number: 22936203.3
(22) Date of filing: 08.04.2022
(51) Int. Cl.: H04W 24/00, H04W 76/18

(54) **METHOD AND DEVICE FOR EVALUATING QUALITY OF DOWNLINK RADIO LINK**

(71) Applicant: FUJITSU LIMITED, Kawasaki-shi, Kanagawa 211-8588 (JP)
(72) Inventor: JIA, Meiyi, Beijing 100022 (CN); LI, Guorong, Beijing 100022 (CN); YI, Su, Beijing 100022 (CN)
(74) Representative: Haseltine Lake Kempner LLP
(86) International application number: PCT/CN2022/085962
(87) International publication number: WO 2023/193266

(57) **Abstract**

Embodiments of this disclosure provide a method and apparatus for evaluating downlink radio link quality. The method is applicable to a terminal equipment and includes: configuring a secondary cell group, wherein in a case where a network indicates that the secondary cell group supports radio link monitoring, when the secondary cell group is deactivated, radio link monitoring is performed on a primary secondary cell, and/or, in a case where the network indicates that the secondary cell group supports beam failure detection and a primary secondary cell is configured with a reference signal for beam failure detection of a cell, when the secondary cell group is deactivated, beam failure detection of the primary secondary cell is performed, and/or, in a case where the network indicates that the secondary cell group supports beam failure detection and a primary secondary cell is configured with a reference signal for TRP-specific beam failure detection, when the secondary cell group is deactivated, TRP-specific beam failure detection of the primary secondary cell is performed.

## Description

### Technical Field

This disclosure relates to the field of communication technologies.

### Background

In RRC connection (RRC_CONNECTED), based on a reference signal (such as a synchronization signal and a PBCH block SSB or a channel state information reference signal CSI-RS) and a reference signal threshold configured by a network, a terminal equipment performs radio link monitoring (RLM) in an active bandwidth part (BWP).

The radio link monitoring is applicable to primary cells (PCells) in SA NR, NR-DC and NE-DC operating modes and primary secondary cells (PSCells) in NR-DC and EN-DC operating modes.

SSB-based RLM is based on an SSB with which an initial downlink (DL) BWP is associated, and can only be configured for an initial DL BWP and DL BWPs including SSBs with which the initial DL BWP are associated. For other DL BWPs, RLM is performed only based on CSI-RSs. A terminal equipment is not required to perform RLM outside of an active DL BWP.

In a case of dual active protocol stack (DAPS) handover, a terminal equipment continues with radio link failure (RLF) detection on a source cell, until a random access procedure is successfully completed in a target cell.

In addition, for a beam failure detection (BFD) procedure, the terminal equipment will evaluate downlink radio link quality of a serving cell based on a reference signal, so as to detect a beam failure. This is applicable to PCells in SA, NR-DC and NE-DC operating modes, PSCells in NR-DC and EN-DC operating modes, and SCells in SA, NR-DC, NE-DC, or EN-DC operating modes. The terminal equipment is not required to perform beam failure detection on a deactivated SCell, nor is it required to perform beam failure detection on resources implicitly configured for a deactivated SCell.

SSB-based beam failure detection is based on SSBs with which an initial DL BWP is associated, and can only be configured for the initial DL BWP and DL BWPs including SSBs with which the initial DL BWP are associated. For other DL BWPs, beam failure detection is only performed based on CSI-RSs. The terminal equipment is not required to perform beam failure detection outside of an active DL BWP.

Beam failures are detected by calculating the number of beam failure instance indications from a lower layer to an MAC entity.

For detection of a problem of a physical layer in an RRC_CONNECTED state, the terminal equipment will:
1> if any DAPS bearer is configured, when consecutive N310 "out of sync" indications of a source special cell are received from a lower layer and T304 is running:
   2> start timer T310 of the source special cell.
1> when consecutive N310 "out of sync" indications of the special cell are received from the lower layer while T300, T301, T304, T311, T316 and T319 are not running:
   2> start timer T310 of a corresponding special cell.

Recovery of the problem of the physical layer, that is, when consecutive N311 "in sync" indications of a special cell are received from the lower layer while T310 is running, the terminal equipment will:
1> stop timer T310 of the corresponding special cell.
1> stop timer T312 of the corresponding special cell.

Detection of radio link failures includes that the terminal equipment will:
1> if any DAPS bearer is configured and T304 is running:
   2> once T310 in the special cell expires, or
   2> once a source MCG MAC indicates a problem of random access, or
   2> once a source MCG RLC indicates that a maximum number of times of retransmission is reached, or
   2> once the source MCG MAC indicates continuous uplink LBT failures:
      3> consider that the source MCG detects a radio link failure, i.e. a source RLF;
      3> suspend transmission and reception of all DRBs in the source MCG;
      3> reset the source MCG MAC;
      3> release source connection.
1> else,
   2> during DAPS handover, the following applies only to the target PCell
   2> once T310 in the PCell expires, or
   2> once T312 in the PCell expires, or
   2> once the MCG MAC indicates a problem of random access and T300, T301, T304, T311 and T319 are not running, or
   2> once the MCG RLC indicates that the maximum number of times of retransmission is reached, or
   2> if connected as an IAB node, once a BH RLF indication of a BAP entity is received from the MCG, or
   2> once the MCG MAC indicates continuous uplink LBT failures and T304 is not running:
      3> if the indication is from MCG RLC, CA duplication is configured and is activated for the MCG, and for a corresponding logical channel, *allowedServingCells* only includes secondary cell(s):
         4> initiate a failure information procedure to report an RLC failure.
      3> else,
         4> consider the MCG detects a radio link failure, i.e. an MCG RLF;
         4> discard all segments of a stored segmented RRC message;
         4> if AS security has not been activated,
            5> perform action of entering RRC_IDLE, with a cause of release being 'other';
         4> else, if AS security has been activated but SRB2 has not been established and there is at least one DRB, or if SRB2 has not been established for IAB,
            5> store radio link failure information;
            5> perform action of entering RRC_IDLE, with a cause of release being 'RRC connection failed';
         4> else:
            5> store radio link failure information;
            5> if T316 is configured; and
            5> if SCG transmission is not suspended; and
            5> if no PSCell change or PSCell addition is performed (i.e. timer T304 of an NR PSCell is not running in case of NR-DC or timer T307 of an E-UTRA PSCell is not running in case of NE-DC),
               6> initiate an MCG failure information procedure to report an MCG radio link failure;
            5> else,
               6> initiate a connection reestablishment procedure.

The detection of radio link failure further includes that the terminal equipment will,
1> once T310 in the PSCell expires; or
1> once T312 in the PSCell expires; or
1> once SCG MAC indicates a problem of random access; or
1> once SCG RLC indicates that the maximum number of times of retransmission is reached; or
1> if connected as an IAB node, once a BH RLF indication from a BAP entity is received from the SCG; or
1> once SCG MAC indicates continuous uplink LBT failures,
   2> if the indication is from SCG RLC, CA duplication is configured and is activated for an SCG, and for a corresponding logical channel, *allowedServingCells* only includes secondary cell(s):
      3> initiate a failure information procedure to report an RLC failure;
   2> else,
      3> consider the SCG detects a radio link failure, i.e. an SCG RLF;
      3> if the MCG is not suspended:
         4> initiate an SCG failure information procedure to report an SCG radio link failure;
      3> else,
         4> initiate a connection reestablishment procedure.

The beam failure detection process uses a terminal equipment (UE) variable BFI_COUNTER, which is a counter of the beam failure instance indications, and is initially set to be 0, and each serving cell has a counter.

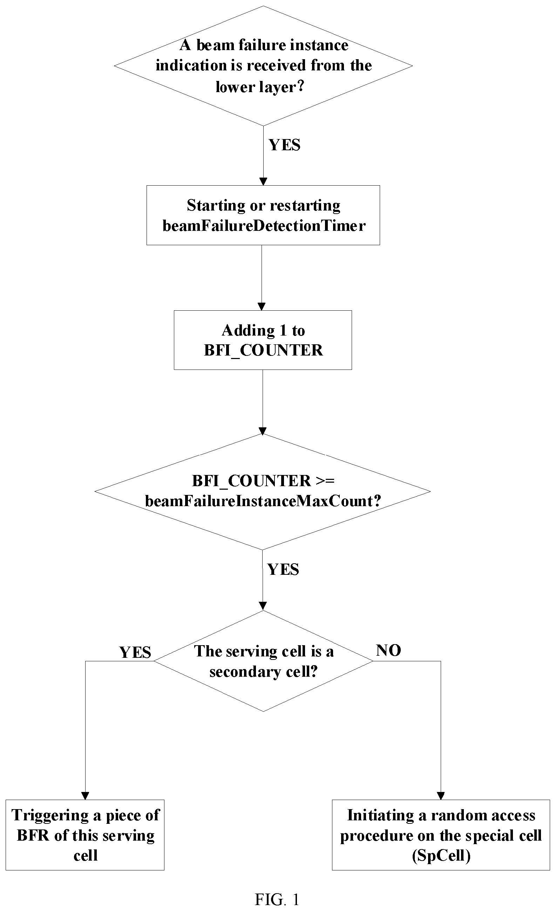

FIG. 1 is a flowchart of detection of a beam failure or triggering of beam failure recovery of a serving cell. As shown in FIG. 1,

```
    for each serving cell configured with beam failure detection, the MAC entity will,
    if a beam failure instance indication has been received from lower layers,
    start or restart the beamFailureDetectionTimer;
    increment BFI_COUNTER by 1;
    if BFI_COUNTER >= beamFailureInstanceMaxCount,
       if the serving cell is a secondary cell (SCell), trigger a BFR of the serving cell;
       otherwise, initiate a random access procedure on the special cell (SpCell);
    if the beamFailureDetectionTimer expires, or
    if beamFailureDetectionTimer, beamFailureInstanceMaxCount or any of the
 reference signals used for beam failure detection is reconfigured by upper layers
 associated with this serving cell,
       set BFI_COUNTER to 0.
```

This procedure is applicable to a special cell and a secondary cell in Rel-15 and Rel-16.

The MAC entity may be configured with a beam failure recovery procedure by RRC per serving cell, and the procedure is used to indicate a new SSB or CSI-RS to a serving network device when a beam failure is detected on serving SSB(s) or CSI-RS(s).

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In a first aspect, for beam failure detection under multi-TRP (transmission reception point) operations, a network device configures two beam failure detection reference signal sets for a terminal equipment, each set being associated with a TRP. Before a configured timer expires, when the number of beam failure instance indications with which a corresponding set of beam failure detection reference signals from a physical layer is associated reaches a configured threshold, the terminal equipment declares beam failure of this TRP.

After beam failures of a TRP of a serving cell are detected, the terminal equipment,
- triggers beam failure recovery by initiating transmission of a BFR MAC CE of this TRP;
- selects a suitable beam (if available) for this TRP and indicate in the BFR MAC CE of this TRP whether a suitable (new) beam is found and information on beam failure.

When a PDCCH indicating uplink grant for a new transmission is received for the HARQ process used for the transmission of a BFR MAC CE of a TRP, consider beam failure recovery of this TRP completed.

After beam failures of two TRPs of a special cell are detected, the terminal equipment,
- triggers beam failure recovery by initiating a random access procedure on a special cell;
- selects a suitable beam (if available) for each failed TRP and indicates in a BFR MAC CE of each failed TRP whether a suitable (new) beam is found and information on beam failure;
- when the random access procedure is completed, consider beam failure recovery of the two TRPs of the special completed.

Specifically,
Regarding triggering of TRP-specific beam failure recovery, RRC configures some parameters, such as,
- *beamFailureInstanceMaxCount* for the beam failure detection per BFD-RS set of serving cell configured with two BFD-RS sets
- *beamFailureDetectionTimer* for the beam failure detection per BFD-RS set of serving cell configured with two BFD-RS sets.

The following UE variable is used for the beam failure detection procedure:
- *BFI COUNTER* (per BFD-RS set of serving cell configured with 2 BFD-RS sets): a counter for beam failure instance indication, which is initially set to 0.

For each serving cell configured for beam failure detection, the MAC entity will,
1> if the serving cell is configured with two BFD-RS sets, for each BFD-RS set of this serving cell, the MAC entity will,
   2> if beam failure instance indication for a BFD-RS set has been received from lower layers,
      3> start or restart the *beamFailureDetectionTimer;*
      3> increment *BFI_COUNTER* of the BFD-RS set by 1;
      3> if *BFI_COUNTER >= beamFailureInstanceMaxCount,*
         4> trigger a BFR for this BFD-RS set of the serving cell;
   2> if BFR is triggered for both BFD-RS sets of the special cell and is not successfully completed,
      3> initiate a random access procedure on the special cell;
   2> if the serving cell is a special cell and the random access procedure initiated for beam failure recovery of both BFD-RS sets of special cell is successfully completed,
      3> set *BFI_COUNTER* of each BFD-RS set of the special cell to 0;
      3> consider the beam failure recovery procedure successfully completed;
   2> if *beamFailureDetectionTimer* of this BFD-RS set expires, or
   2> if *beamFailureDetectionTimer,* beamFailureInstanceMaxCount, or any of the reference signals used for beam failure detection is reconfigured by upper layers associated with a BFD-RS set of the serving cell,
      3> set *BFI_COUNTER* of the BFD-RS set to 0;
   2> if a PDCCH addressed to a C-RNTI indicating uplink grant for a new transmission is received for the HARQ procedure used for the transmission of the enhanced BFR MAC CE or truncated enhanced BFR MAC CE which contains beam failure recovery information of this BFD-RS set of the serving cell,
      3> set *BFI_COUNTER* of the BFD-RS set to 0;
      3> consider the beam failure recovery procedure successfully completed and cancel all the triggered BFRs of this BFD-RS set of the serving cell;
   2> if this serving cell is a secondary cell and the secondary cell is deactivated,
      3> set *BFI_COUNTER* of each BFD-RS set of the secondary cell to 0;
      3> consider the beam failure recovery procedure successfully completed and cancel all the triggered BFRs of all BFD-RS sets of the serving cell.

In a second aspect, for further enhancement of multi-RAT dual-connectivity, in Rel-16, mobility enhancements of NR and LTE are achieved in 3GPP, so as to reduce data transmission interruptions during handover and improve handover robustness. In Rel-16, some enhancements have been introduced into 3GPP to improve high-efficiency MR-DC configuration and enhance MR-DC performance, such as by early measurement reporting and fast MCG failure recovery by an SCG.

In EN-DC, as two radio links are maintained simultaneously, the energy consumption of a terminal equipment and a network is a major problem. In some cases, energy consumption of an NR UE is 3-4 times higher than that of LTE. In EN-DC deployment, an MN provides basic coverage. When a demand of a terminal equipment for data rates changes dynamically, such as from high to low, an SN is (de)activated to save energy consumption of a network and a terminal equipment, and this is worth considering. Therefore, in Rel-17, a high-efficiency SCG (de)activation mechanism should be defined, which is also applicable to other MR-DC operations, such as NGEN-DC and NR-DC.

It was found by the inventors that based on existing techniques and the first aspect above, in order to detect radio link failures and/or beam failures, a terminal equipment is required to:
- monitor radio link quality of a reference signal used for radio link failure detection, so as to provide an "in sync" indication or "out of sync" indication to an upper layer (RRC);
- evaluate radio link quality of a reference signal used for beam failure detection, so as to provide a beam failure instance indication to the upper layer (MAC), wherein the reference signal used for beam failure detection may be configured for an active DL BWP of a special cell or an activated SCell, or configured for a TRP of a cell.

Based on the second point above, Rel-17 supports an SCG activation and deactivation mechanism, wherein a special cell PSCell of the SCG may be deactivated. When the SCG is deactivated, a PSCell and all SCells of the SCG are deactivated. If the network configured, the terminal equipment performs RLM and beam failure detection on the PSCell. During the SCG is deactivated, for beam failure of the PSCell, when beams of the PSCell fail, the terminal equipment stops beam failure detection; and when a BFD-RS is reconfigured, beam failure detection is recovered. When an SCG activation command of the network is received, if RLF or beam failure is declared, the terminal equipment will perform a random access procedure to the SCG.

It was found by the inventors that following problems exist in the related art:
if cell-level beam failure detection under SCG activation is only supported, the PSCell may possibly not be configured with a reference signal for beam failure detection of a cell, but configure with a reference signal for TRP-specific beam failure detection, in which case when the SCG is deactivated, even if the network configures the terminal equipment to perform beam failure detection, the terminal equipment is unable to perform cell-level beam failure detection, and is unable to evaluate quality of beams, causing the terminal equipment to use beams with poor radio link quality for communication and reducing communication quality;
If cell-level/TRP-specific beam failure detection under SCG deactivation is supported, according to existing mechanisms, when beams fail, the terminal equipment stops beam failure detection, and initiates a random access procedure to the SCG when the SCG is deactivated. If beam failure only occurs in one TRP of the PSCell and the other TRP is still available, the random access procedure during SCG deactivation is unnecessary, resulting in increase in energy consumption and lowering user experiences.

In order to solve one or more of the above problems, embodiments of this disclosure provide a method and apparatus for evaluating downlink radio link quality.

According to a first aspect of the embodiments of this disclosure, there is provided an apparatus for evaluating downlink radio link quality, applicable to a terminal equipment, the apparatus including: a first configuring unit configured to configure a secondary cell group (SCG); wherein in a case where a network indicates that the secondary cell group supports radio link monitoring (RLM), when the secondary cell group is deactivated, the terminal equipment performs radio link monitoring on a primary secondary cell (PSCell); and/or, in a case where the network indicates that the secondary cell group supports beam failure detection and a primary secondary cell is configured with a reference signal for beam failure detection of a cell, when the secondary cell group is deactivated, the terminal equipment performs beam failure detection of the primary secondary cell; and/or, in a case where the network indicates that the secondary cell group supports beam failure detection and a primary secondary cell is configured with a reference signal for TRP-specific beam failure detection, when the secondary cell group is deactivated, the terminal equipment performs TRP-specific beam failure detection of the primary secondary cell.

According to a second aspect of the embodiments of this disclosure, there is provided an apparatus for evaluating downlink radio link quality, applicable to a terminal equipment, the apparatus including: a second configuring unit configured to configure a secondary cell group (SCG); wherein in a case where a network does not indicate that the secondary cell group supports radio link monitoring (RLM), when the secondary cell group is deactivated, the terminal equipment stops radio link monitoring on a primary secondary cell (PSCell); and/or, in a case where the network does not indicate that the secondary cell group supports beam failure detection, or does not configure the primary secondary cell with a reference signal used for beam failure detection of a cell, when the secondary cell group is deactivated, the terminal equipment stops beam failure detection on the primary secondary cell; and/or, in a case where the network does not configure that the secondary cell group supports beam failure detection or does not configure the primary secondary cell with a reference signal for TRP-specific beam failure detection, when the secondary cell group is deactivated, the terminal equipment stops TRP-specific beam failure detection on the primary secondary cell.

According to a third aspect of the embodiments of this disclosure, there is provided an apparatus for evaluating downlink radio link quality, applicable to a terminal equipment, the apparatus including: a third configuring unit configured to configure a secondary cell group (SCG); wherein in a case where a network indicates that the secondary cell group or a secondary cell of the secondary cell group supports radio link monitoring (RLM), when the secondary cell group is deactivated, the terminal equipment performs radio link monitoring on the secondary cell; and/or, in a case where the network indicates that the secondary cell group or a secondary cell of the secondary cell group supports beam failure detection and configures the secondary cell with a reference signal used for beam failure detection of a cell, when the secondary cell group is deactivated, the terminal equipment performs beam failure detection on the secondary cell; and/or, in a case where the network indicates that the secondary cell group or a secondary cell of the secondary cell group supports beam failure detection and configures the secondary cell with a reference signal used for TRP-specific beam failure detection, when the secondary cell group is deactivated, the terminal equipment performs TRP-specific beam failure detection of the secondary cell.

According to a fourth aspect of the embodiments of this disclosure, there is provided an apparatus for evaluating downlink radio link quality, applicable to a terminal equipment, the apparatus including: a fourth configuring unit configured to configure a secondary cell group (SCG); wherein in a case where a network does not indicate that the secondary cell group or a secondary cell (SCell) of the secondary cell group supports radio link monitoring (RLM), when the secondary cell group is deactivated, the terminal equipment stops radio link monitoring on the secondary cell; and/or, in a case where the network does not indicate that the secondary cell group or a secondary cell of the secondary cell group supports beam failure detection, or does not configure the secondary cell with a reference signal used for beam failure detection of a cell, when the secondary cell group is deactivated, the terminal equipment stops beam failure detection on the secondary cell; and/or, in a case where the network does not indicate that the secondary cell group or a secondary cell of the secondary cell group supports beam failure detection, or does not configure the secondary cell with a reference signal used for TRP-specific beam failure detection, when the secondary cell group is deactivated, the terminal equipment stops TRP-specific beam failure detection on the secondary cell.

According to a fifth aspect of the embodiments of this disclosure, there is provided an apparatus for evaluating downlink radio link quality, applicable to a terminal equipment, wherein for each serving cell configured with beam failure detection, when a first counter is greater than or equal to a preset threshold, in a case where the serving cell is a primary secondary cell, the primary secondary cell is deactivated and beam failure of the primary secondary cell has not been indicated to an upper layer since the primary secondary cell is deactivated, an MAC entity indicates beam failure of the primary secondary cell to the upper layer.

According to a sixth aspect of the embodiments of this disclosure, there is provided an apparatus for evaluating downlink radio link quality, applicable to a network device, the apparatus including: a fifth configuring unit configured to configure a secondary cell group (SCG) for a terminal equipment; wherein in a case where it is indicated that the secondary cell group supports radio link monitoring (RLM), when the secondary cell group is deactivated, the terminal equipment performs radio link monitoring on a primary secondary cell (PSCell); and/or, in a case where it is indicated that the secondary cell group supports beam failure detection and a primary secondary cell is configured with a reference signal used for beam failure detection of a cell, when the secondary cell group is deactivated, the terminal equipment performs beam failure detection of the primary secondary cell; and/or, in a case where it is indicated that the secondary cell group supports beam failure detection and a primary secondary cell is configured with a reference signal used for TRP-specific beam failure detection, when the secondary cell group is deactivated, the terminal equipment performs TRP-specific beam failure detection of the primary secondary cell.

According to a seventh aspect of the embodiments of this disclosure, there is provided an apparatus for evaluating downlink radio link quality, applicable to a network device, the apparatus including: a sixth configuring unit configured to configure a secondary cell group (SCG) for a terminal equipment; wherein in a case where it is not indicated that the secondary cell group supports radio link monitoring (RLM), when the secondary cell group is deactivated, the terminal equipment stops radio link monitoring on a primary secondary cell (PSCell); and/or, in a case where it is not indicated that the secondary cell group supports beam failure detection, or the primary secondary cell is not configured with a reference signal for beam failure detection of a cell, when the secondary cell group is deactivated, the terminal equipment stops beam failure detection on the primary secondary cell; and/or, in a case where it is not configured that the secondary cell group supports beam failure detection, or the primary secondary cell is not configured with a reference signal for TRP-specific beam failure detection, when the secondary cell group is deactivated, the terminal equipment stops TRP-specific beam failure detection on the primary secondary cell.

According to an eighth aspect of the embodiments of this disclosure, there is provided an apparatus for evaluating downlink radio link quality, applicable to a network device, the apparatus including: a seventh configuring unit configured to configure a secondary cell group (SCG) for a terminal equipment; wherein in a case where it is indicated that the secondary cell group or a secondary cell (SCell) of the secondary cell group supports radio link monitoring (RLM), when the secondary cell group is deactivated, the terminal equipment performs radio link monitoring on the secondary cell; and/or, in a case where it is indicated that the secondary cell group or a secondary cell of the secondary cell group supports beam failure detection and the secondary cell is configured with a reference signal for beam failure detection of a cell, when the secondary cell group is deactivated, the terminal equipment performs beam failure detection of the secondary cell; and/or, in a case where it is indicated that the secondary cell group or a secondary cell of the secondary cell group supports beam failure detection and the secondary cell is configured with a reference signal for TRP-specific beam failure detection, when the secondary cell group is deactivated, the terminal equipment performs TRP-specific beam failure detection of the secondary cell.

According to a ninth aspect of the embodiments of this disclosure, there is provided an apparatus for evaluating downlink radio link quality, applicable to a network device, the apparatus including: an eighth configuring unit configured to configure a secondary cell group (SCG) for a terminal equipment; wherein in a case where it is not indicated that the secondary cell group or a secondary cell (SCell) of the secondary cell group supports radio link monitoring (RLM), when the secondary cell group is deactivated, the terminal equipment stops radio link monitoring on the secondary cell; and/or, in a case where it is not indicated that the secondary cell group or a secondary cell of the secondary cell group supports beam failure detection or the secondary cell is not configured with a reference signal for beam failure detection of a cell, when the secondary cell group is deactivated, the terminal equipment stops beam failure detection on the secondary cell; and/or, in a case where it is not indicated that the secondary cell group or a secondary cell of the secondary cell group supports beam failure detection and the secondary cell is not configured with a reference signal for TRP-specific beam failure detection, when the secondary cell group is deactivated, the terminal equipment stops TRP-specific beam failure detection on the secondary cell.

According to a tenth aspect of the embodiments of this disclosure, there is provided a terminal equipment, including the apparatus as described in any of the first to the fifth aspects of the embodiments of this disclosure.

According to an eleventh aspect of the embodiments of this disclosure, there is provided a network device, including the apparatus as described in any of the sixth to the ninth aspects of the embodiments of this disclosure.

According to a twelfth aspect of the embodiments of this disclosure, there is provided a communication system, including the terminal equipment as described in the tenth aspect of the embodiments of this disclosure and/or the network device as described in the eleventh aspect of the embodiments of this disclosure.

According to a thirteenth aspect of the embodiments of this disclosure, there is provided a method for evaluating downlink radio link quality, applicable to a terminal equipment, the method including: configuring a secondary cell group (SCG); wherein in a case where a network indicates that the secondary cell group supports radio link monitoring (RLM), when the secondary cell group is deactivated, radio link monitoring is performed on a primary secondary cell (PSCell); and/or, in a case where the network indicates that the secondary cell group supports beam failure detection and a primary secondary cell is configured with a reference signal for beam failure detection of a cell, when the secondary cell group is deactivated, beam failure detection of the primary secondary cell is performed; and/or, in a case where the network indicates that the secondary cell group supports beam failure detection and a primary secondary cell is configured with a reference signal for TRP-specific beam failure detection, when the secondary cell group is deactivated, TRP-specific beam failure detection of the primary secondary cell is performed.

According to a fourteenth aspect of the embodiments of this disclosure, there is provided a method for evaluating downlink radio link quality, applicable to a terminal equipment, the method including: configuring a secondary cell group (SCG); wherein in a case where a network does not indicate that the secondary cell group supports radio link monitoring (RLM), when the secondary cell group is deactivated, radio link monitoring on a primary secondary cell (PSCell) is stopped; and/or, in a case where the network does not indicate that the secondary cell group supports beam failure detection, or the primary secondary cell is not configured with a reference signal used for beam failure detection of a cell, when the secondary cell group is deactivated, beam failure detection on the primary secondary cell is stopped; and/or, in a case where the network does not configure that the secondary cell group supports beam failure detection or does not configure the primary secondary cell with a reference signal for TRP-specific beam failure detection, when the secondary cell group is deactivated, TRP-specific beam failure detection on the primary secondary cell is stopped.

According to a fifteenth aspect of the embodiments of this disclosure, there is provided a method for evaluating downlink radio link quality, applicable to a terminal equipment, the method including: configuring a secondary cell group (SCG); wherein in a case where a network indicates that the secondary cell group or a secondary cell of the secondary cell group supports radio link monitoring (RLM), when the secondary cell group is deactivated, radio link monitoring is performed on the secondary cell; and/or, in a case where the network indicates that the secondary cell group or a secondary cell of the secondary cell group supports beam failure detection and configures the secondary cell with a reference signal used for beam failure detection of a cell, when the secondary cell group is deactivated, beam failure detection of the secondary cell is performed; and/or, in a case where the secondary cell is configured with a reference signal used for TRP-specific beam failure detection, when the secondary cell group is deactivated, TRP-specific beam failure detection of the secondary cell is performed.

According to a sixteenth aspect of the embodiments of this disclosure, there is provided a method for evaluating downlink radio link quality, applicable to a terminal equipment, the method including: configuring a secondary cell group (SCG); wherein in a case where a network does not indicate that the secondary cell group or a secondary cell (SCell) of the secondary cell group supports radio link monitoring (RLM), when the secondary cell group is deactivated, radio link monitoring on the secondary cell is stopped; and/or, in a case where the network does not indicate that the secondary cell group or a secondary cell of the secondary cell group supports beam failure detection, or does not configure the secondary cell with a reference signal used for beam failure detection of a cell, when the secondary cell group is deactivated, beam failure detection on the secondary cell is stopped; and/or, in a case where the network does not indicate that the secondary cell group or a secondary cell of the secondary cell group supports beam failure detection, or does not configure the secondary cell with a reference signal used for TRP-specific beam failure detection, when the secondary cell group is deactivated, TRP-specific beam failure detection on the secondary cell is stopped.

According to a seventeenth aspect of the embodiments of this disclosure, there is provided a method for evaluating downlink radio link quality, applicable to a terminal equipment, the method including: for each serving cell configured with beam failure detection, when a first counter is greater than or equal to a preset threshold, in a case where the serving cell is a primary secondary cell, the primary secondary cell is deactivated and beam failure of the primary secondary cell has not been indicated to an upper layer since the primary secondary cell is deactivated, indicating beam failure of the primary secondary cell by an MAC entity to the upper layer.

According to an eighteenth aspect of the embodiments of this disclosure, there is provided a method for evaluating downlink radio link quality, applicable to a network device, the method including: configuring a secondary cell group (SCG) for a terminal equipment; wherein in a case where it is indicated that the secondary cell group supports radio link monitoring (RLM), when the secondary cell group is deactivated, the terminal equipment performs radio link monitoring on a primary secondary cell (PSCell); and/or, in a case where it is indicated that the secondary cell group supports beam failure detection and a primary secondary cell is configured with a reference signal used for beam failure detection of a cell, when the secondary cell group is deactivated, the terminal equipment performs beam failure detection of the primary secondary cell; and/or, in a case where it is indicated that the secondary cell group supports beam failure detection and a primary secondary cell is configured with a reference signal used for TRP-specific beam failure detection, when the secondary cell group is deactivated, the terminal equipment performs TRP-specific beam failure detection of the primary secondary cell.

According to a nineteenth aspect of the embodiments of this disclosure, there is provided a method for evaluating downlink radio link quality, applicable to a network device, the method including: configuring a secondary cell group (SCG) for a terminal equipment; wherein in a case where it is not indicated that the secondary cell group supports radio link monitoring (RLM), when the secondary cell group is deactivated, the terminal equipment stops radio link monitoring on a primary secondary cell (PSCell); and/or, in a case where it is not indicated that the secondary cell group supports beam failure detection, or the primary secondary cell is not configured with a reference signal for beam failure detection of a cell, when the secondary cell group is deactivated, the terminal equipment stops beam failure detection on the primary secondary cell; and/or, in a case where it is not configured that the secondary cell group supports beam failure detection, or the primary secondary cell is not configured with a reference signal for TRP-specific beam failure detection, when the secondary cell group is deactivated, the terminal equipment stops TRP-specific beam failure detection on the primary secondary cell.

According to a twentieth aspect of the embodiments of this disclosure, there is provided a method for evaluating downlink radio link quality, applicable to a network device, the method including: configuring a secondary cell group (SCG) for a terminal equipment; wherein in a case where it is indicated that the secondary cell group or a secondary cell (SCell) of the secondary cell group supports radio link monitoring (RLM), when the secondary cell group is deactivated, the terminal equipment performs radio link monitoring on the secondary cell; and/or, in a case where it is indicated that the secondary cell group or a secondary cell of the secondary cell group supports beam failure detection and the secondary cell is configured with a reference signal for beam failure detection of a cell, when the secondary cell group is deactivated, the terminal equipment performs beam failure detection of the secondary cell; and/or, in a case where it is indicated that the secondary cell group or a secondary cell of the secondary cell group supports beam failure detection and the secondary cell is configured with a reference signal for TRP-specific beam failure detection, when the secondary cell group is deactivated, the terminal equipment performs TRP-specific beam failure detection of the secondary cell.

According to a twenty-first aspect of the embodiments of this disclosure, there is provided a method for evaluating downlink radio link quality, applicable to a network device, the method including: configuring a secondary cell group (SCG) for a terminal equipment; wherein in a case where it is not indicated that the secondary cell group or a secondary cell (SCell) of the secondary cell group supports radio link monitoring (RLM), when the secondary cell group is deactivated, the terminal equipment stops radio link monitoring on the secondary cell; and/or, in a case where it is not indicated that the secondary cell group or a secondary cell of the secondary cell group supports beam failure detection or the secondary cell is not configured with a reference signal for beam failure detection of a cell, when the secondary cell group is deactivated, the terminal equipment stops beam failure detection on the secondary cell; and/or, in a case where it is not indicated that the secondary cell group or a secondary cell of the secondary cell group supports beam failure detection and the secondary cell is not configured with a reference signal for TRP-specific beam failure detection, when the secondary cell group is deactivated, the terminal equipment stops TRP-specific beam failure detection on the secondary cell.

According to a twenty-second aspect of the embodiments of this disclosure, there is provided a computer readable program code, which, when executed in an apparatus for evaluating downlink radio link quality or a terminal equipment, will cause the apparatus for evaluating downlink radio link quality or the terminal equipment to carry out the method for evaluating downlink radio link quality as described in any one of the thirteenth to seventeenth aspects of the embodiments of this disclosure.

According to a twenty-third aspect of the embodiments of this disclosure, there is provided a computer readable medium, including a computer readable program code, which will cause an apparatus for evaluating downlink radio link quality or a terminal equipment to carry out the method for evaluating downlink radio link quality as described in any one of the thirteenth to seventeenth aspects of the embodiments of this disclosure.

According to a twenty-fourth aspect of the embodiments of this disclosure, there is provided a computer readable program code, which, when executed in an apparatus for evaluating downlink radio link quality or a network device, will cause the apparatus for evaluating downlink radio link quality or the network device to carry out the method for evaluating downlink radio link quality as described in any one of the eighteenth to twenty-first aspects of the embodiments of this disclosure.

According to a twenty-fifth aspect of the embodiments of this disclosure, there is provided a computer readable medium, including a computer readable program code, which will cause an apparatus for evaluating downlink radio link quality or a network device to carry out the method for evaluating downlink radio link quality as described in any one of the eighteenth to twenty-first aspects of the embodiments of this disclosure.

An advantage of the embodiments of this disclosure exists in that,
in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences;
moreover, in the case where the network indicates that the SCG supports radio link monitoring and/or beam failure detection of the secondary cell, when the SCG is deactivated, radio link monitoring and/or beam failure detection of the secondary cell is/are performed. Therefore, when the SCG is deactivated, the terminal equipment is able to perform radio link monitoring and/or beam failure detection of the secondary cell to evaluate quality of the radio links and/or beams, so that the terminal equipment is able to use radio links and/or beams with relatively good quality for communication, thereby ensuring communication quality.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a flowchart of detection of a beam failure or triggering of beam failure recovery of a serving cell;
FIG. 2 is a schematic diagram of a communication system of an embodiment of this disclosure;
FIG. 3 is a schematic diagram of a multi-TRP scenario of an embodiment of this disclosure;
FIG. 4 is a schematic diagram of the method for evaluating downlink radio link quality of embodiment 1 of this disclosure;
FIG. 5 is a schematic diagram of the method for evaluating downlink radio link quality of embodiment 2 of this disclosure;
FIG. 6 is a schematic diagram of the method for evaluating downlink radio link quality of embodiment 3 of this disclosure;
FIG. 7 is a schematic diagram of the method for evaluating downlink radio link quality of embodiment 4 of this disclosure;
FIG. 8 is another schematic diagram of the method for evaluating downlink radio link quality of embodiment 4 of this disclosure;
FIG. 9 is a schematic diagram of the method for evaluating downlink radio link quality of embodiment 5 of this disclosure;
FIG. 10 is a schematic diagram of the method for evaluating downlink radio link quality of embodiment 6 of this disclosure;
FIG. 11 is a schematic diagram of the method for evaluating downlink radio link quality of embodiment 7 of this disclosure;
FIG. 12 is a schematic diagram of the method for evaluating downlink radio link quality of embodiment 8 of this disclosure;
FIG. 13 is another schematic diagram of the method for evaluating downlink radio link quality of embodiment 8 of this disclosure;
FIG. 14 is a schematic diagram of the apparatus for evaluating downlink radio link quality of embodiment 9 of this disclosure;
FIG. 15 is a schematic diagram of the apparatus for evaluating downlink radio link quality of embodiment 10 of this disclosure;
FIG. 16 is a schematic diagram of the apparatus for evaluating downlink radio link quality of embodiment 11 of this disclosure;
FIG. 17 is another schematic diagram of the apparatus for evaluating downlink radio link quality of embodiment 11 of this disclosure;
FIG. 18 is a schematic diagram of the apparatus for evaluating downlink radio link quality of embodiment 13 of this disclosure;
FIG. 19 is a schematic diagram of the apparatus for evaluating downlink radio link quality of embodiment 14 of this disclosure;
FIG. 20 is a schematic diagram of the apparatus for evaluating downlink radio link quality of embodiment 15 of this disclosure;
FIG. 21 is another schematic diagram of the apparatus for evaluating downlink radio link quality of embodiment 15 of this disclosure;
FIG. 22 is a block diagram of a systematic structure of the terminal equipment of embodiment 16 of this disclosure; and
FIG. 23 is a block diagram of a systematic structure of the network device of embodiment 17 of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

Wherein, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the CU/DU is a logical node of the gNB having a part of functions of the gNB. And a term "cell" may refer to a base station and/or its coverage area, depending on a context of the term. One gNB-DU supports one or more cells, and one cell is supported by only one gNB-DU.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc., such as a terminal equipment served by an IAB-node or an IAB-donor under an IAB architecture.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, all of "when... ", "in a case where...", "for a case where..." and "if..." denote one or some conditions or states, and furthermore, all of these expressions are interchangeable.

Scenarios of the embodiments of this disclosure shall be described below by way of examples; however, this disclosure is not limited thereto.

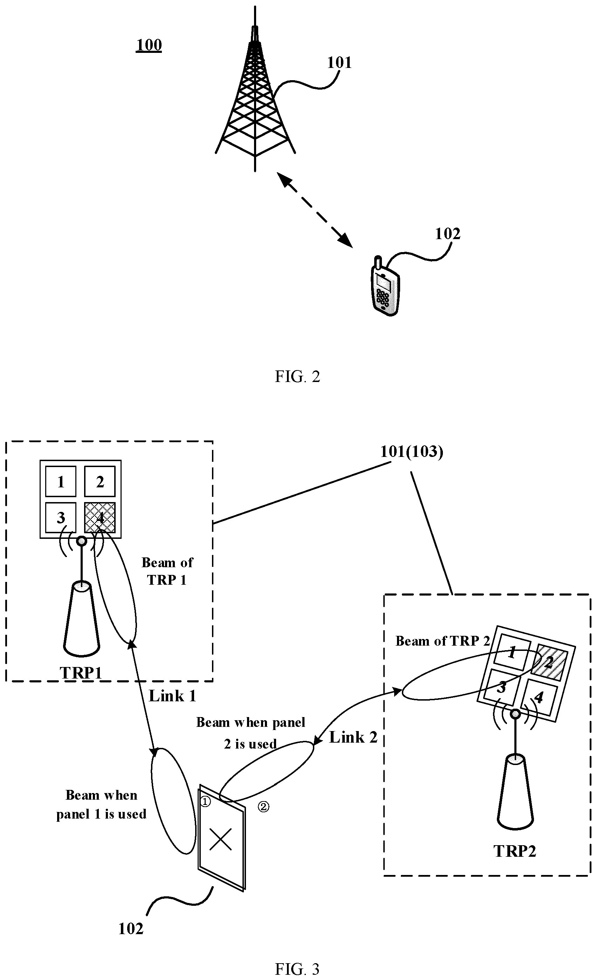

FIG. 2 is a schematic diagram of a communication system of this disclosure, in which a case where a terminal equipment and a network device are taken as examples is schematically shown. As shown in FIG. 2, the communication system 100 may include a network device 101 and a terminal equipment 102. For the sake of simplicity, an example having only one terminal equipment is schematically given in FIG. 2. The network device 101 is, for example, a network device gNB of NR.

In the embodiment of this disclosure, existing services or services that may be implemented in the future may be performed between the network device 101 and the terminal equipment 102. For example, such services may include but not limited to an enhanced mobile broadband (eMBB), massive machine type communication (MTC), and ultra-reliable and low-latency communication (URLLC), etc.

FIG. 3 is a schematic diagram of a multi-TRP scenario of an embodiment of this disclosure. As shown in FIG. 3, the network device 101 deploys two TRPs, TRP1 and TRP2. The network device 101 operates with the terminal equipment 102 via TRP1 and TRP2, for example, TRP1 and TRP2 belong to a PSCell. Even if a beam failure occurs in TRP1 only and TRP2 is still available, according to existing mechanisms, when an SCG is deactivated, the terminal equipment 102 will stop beam failure detection of TRP1 and TRP2, which makes it impossible for the terminal equipment 102 to evaluate beam quality of the PSCell; and when the SCG is activated, the terminal equipment 102 will initiate a random access procedure to the network device 101. This will lead to increase of energy consumption of the network and terminal, and lower user experiences.

Various implementations of the embodiments of this disclosure shall be described below with reference to the accompanying drawings. These implementations are illustrative only, and are not intended to limit this disclosure.

### Embodiment 1

The embodiment of this disclosure provides a method for evaluating downlink radio link quality, applicable to a terminal equipment. For example, this method is applicable to the terminal equipment 102 in FIGs. 2 and 3.

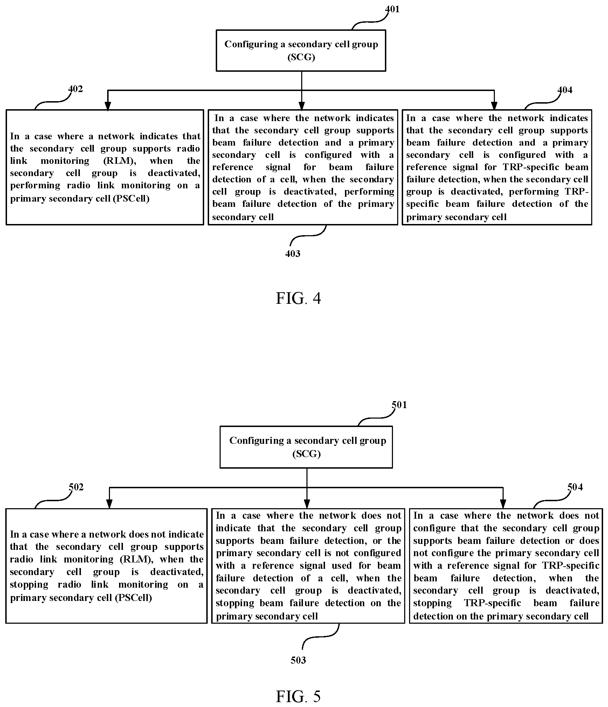

FIG. 4 is a schematic diagram of the method for evaluating downlink radio link quality of embodiment 1 of this disclosure. As shown in FIG. 4, the method includes:
step 401: configuring a secondary cell group (SCG);
step 402: in a case where a network indicates that the secondary cell group supports radio link monitoring (RLM), when the secondary cell group is deactivated, performing radio link monitoring on a primary secondary cell (PSCell); and/or,
step 403: in a case where the network indicates that the secondary cell group supports beam failure detection and a primary secondary cell is configured with a reference signal for beam failure detection of a cell, when the secondary cell group is deactivated, performing beam failure detection of the primary secondary cell; and/or,
step 404: in a case where the network indicates that the secondary cell group supports beam failure detection and a primary secondary cell is configured with a reference signal for TRP-specific beam failure detection, when the secondary cell group is deactivated, performing TRP-specific beam failure detection of the primary secondary cell.

In the embodiment of this disclosure, after step 401, the method may include at least one of steps 402-404, and when multiple steps in steps 402-404 are included, an order of executing these steps is not limited.

Hence, in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

In the embodiments of this disclosure, "TRP-specific" may be replaced with "of a BFD-RS set" or "with which a BFD-RS set is associated".

In the embodiments of this disclosure, "a beam failure" may be replaced with 'beam failure recovery" or "beam failure recovery is triggered".

In step 401, configuring a secondary cell group (SCG) refers to that the terminal equipment configures a secondary cell group.

In the embodiments of this disclosure, the primary secondary cell is a primary secondary cell with a secondary cell group configured by the terminal equipment.

In the embodiments of this disclosure, the configuration indicating whether radio link monitoring (RLM) and/or beam failure detection is supported may be included in an *CellGroupConfig* IE.

In the embodiments of this disclosure, the network may indicate, common configuration or separate configuration indicates that radio link monitoring is supported when the secondary cell group is deactivated or whether radio link monitoring is supported when the secondary cell group is deactivated, and/or common configuration or separate configuration indicates that beam failure detection is supported when the secondary cell group is deactivated or whether beam failure detection is supported when the secondary cell group is deactivated. For example, the common configuration or separate configuration may be included in the *CellGroupConfig* IE.

In the embodiments of this disclosure, the common configuration is used to indicate that the terminal equipment performs radio link monitoring and/or beam failure detection when the SCG is deactivated, or indicate whether the terminal equipment performs radio link monitoring and/or beam failure detection, the beam failure detection including beam failure detection of a cell or TRP-specific beam failure detection.

In the embodiments of this disclosure, the common configuration may be Boolean data or enumerated data.

In the embodiments of this disclosure, in the case where the common configuration is Boolean data, if a value is "true", it means that the terminal equipment performs radio link monitoring and/or beam failure detection when the SCG is deactivated, and if a value is "false", it means that the terminal equipment does not perform/stops performing radio link monitoring and/or beam failure detection when the SCG is deactivated. In this case, a domain of the common configuration is mandatory domain.

For example, in the case where the common configuration is Boolean data, the common configuration is used to configure indicating whether the terminal equipment performs radio link monitoring and/or beam failure detection when the SCG is deactivated, the beam failure detection including beam failure detection of a cell or TRP-specific beam failure detection.

In the embodiments of this disclosure, when the common configuration is enumerated data, its value is 'true'. That is, if this domain is configured, it means that when the SCG is deactivated, the terminal equipment performs radio link monitoring and/or beam failure detection, in which case the domain of the common configuration is an optional domain, rather than mandatory.

For example, in the case where the common configuration is enumerated data, the common configuration is used to configure indicating that the terminal equipment performs radio link monitoring and/or beam failure detection when the SCG is deactivated, the beam failure detection including beam failure detection of a cell or TRP-specific beam failure detection.

In the embodiments of this disclosure, the separate configuration includes at least one of the following:
being used to configure, when the secondary cell group is deactivated, indicating whether the terminal equipment performs radio link monitoring and beam failure detection on the primary secondary cell, or indicating that the terminal equipment performs radio link monitoring and beam failure detection on the primary secondary cell;
being used to configure, when the secondary cell group is deactivated, indicating whether the terminal equipment performs radio link monitoring on the primary secondary cell, or indicating that the terminal equipment performs radio link monitoring on the primary secondary cell;
being used to configure, when the secondary cell group is deactivated, indicating whether the terminal equipment performs beam failure detection of a cell or TRP-specific beam failure detection on the primary secondary cell, or indicating that the terminal equipment performs beam failure detection of a cell or TRP-specific beam failure detection on the primary secondary cell;
being used to configure, when the secondary cell group is deactivated, indicating whether the terminal equipment performs beam failure detection of a cell on the primary secondary cell, or indicating that the terminal equipment performs beam failure detection of a cell on the primary secondary cell; and
being used to configure, when the secondary cell group is deactivated, indicating whether the terminal equipment performs TRP-specific beam failure detection on the primary secondary cell, or indicating that the terminal equipment performs TRP-specific beam failure detection on the primary secondary cell.

In the embodiments of this disclosure, the separate configuration may be Boolean data or enumerated data.

In the embodiments of this disclosure, in the case where the separate configuration is Boolean data, if a value is "true", it means that when the SCG is deactivated, the terminal equipment performs radio link monitoring and/or beam failure detection, and if a value is "false", it means that when the SCG is deactivated, the terminal equipment does not perform radio link monitoring and/or beam failure detection. In this case, a domain of the separate configuration is a mandatory domain.

For example, in the case where the separate configuration is Boolean data,
the separate configuration includes at least one of the following: being used to configure indicating whether the terminal equipment performs radio link monitoring and beam failure detection of a cell on the primary secondary cell when the secondary cell group is deactivated; being used to configure indicating whether the terminal equipment performs radio link monitoring on the primary secondary cell when the secondary cell group is deactivated; being used to configure indicating whether the terminal equipment performs beam failure detection of a cell or TRP-specific beam failure detection on the primary secondary cell when the secondary cell group is deactivated; being used to configure indicating whether the terminal equipment performs beam failure detection of a cell on the primary secondary cell when the secondary cell group is deactivated; and being used to configure indicating whether the terminal equipment performs TRP-specific beam failure detection on the primary secondary cell when the secondary cell group is deactivated.

In the embodiments of this disclosure, when the separate configuration is enumerated data, its value is 'true'. That is, if this domain is configured, it means that when the SCG is deactivated, the terminal equipment performs radio link monitoring and/or beam failure detection, in which case the domain of the separate configuration is an optional domain, rather than mandatory.

For example, in the case where the separate configuration is enumerate data,
the separate configuration includes at least one of the following: being used to configure indicating that the terminal equipment performs radio link monitoring and beam failure detection of a cell on the primary secondary cell when the secondary cell group is deactivated; being used to configure indicating that the terminal equipment performs radio link monitoring on the primary secondary cell when the secondary cell group is deactivated; being used to configure indicating that the terminal equipment performs radio link monitoring on the primary secondary cell when the secondary cell group is deactivated; being used to configure indicating that the terminal equipment performs beam failure detection of a cell or TRP-specific beam failure detection on the primary secondary cell when the secondary cell group is deactivated; being used to configure indicating that the terminal equipment performs beam failure detection of a cell on the primary secondary cell when the secondary cell group is deactivated; and being used to configure indicating that the terminal equipment performs TRP-specific beam failure detection on the primary secondary cell when the secondary cell group is deactivated.

In the embodiments of this disclosure, for the configured secondary cell group, when the upper layer indicates activation of the secondary cell group, the MAC entity will apply at least one of the following secondary cell group activation operations: activating the primary secondary cell; SRS transmission on the primary secondary cell; CSI reporting on the primary secondary cell; PDCCH monitoring on the primary secondary cell; PUCCH transmission on the primary secondary cell; if triggered, performing random access on the primary secondary cell; and initializing Bj of each logical channel with which the primary secondary cell is associated to be 0.

In the embodiments of this disclosure, for the configured secondary cell group, when the upper layer indicates that the secondary cell group is deactivated, the MAC entity will perform at least one of the following: deactivating all secondary cells (SCells) of the configured secondary cell group; deactivating the primary secondary cell; and resetting MAC.

In the embodiments of this disclosure, the resetting MAC includes at least one of the following: stopping all other running timers than a first timer or stopping all running timers; stopping an ongoing random access procedure; clearing an Msg3 buffer; clearing an MSGA buffer; cancelling triggered beam failure recovery (BFR); and resetting a first counter.

In step 402, when the network indicates that the secondary cell group supports radio link monitoring (RLM), radio link monitoring is performed on the primary secondary cell (PSCell) when the secondary cell group is deactivated.

In the embodiments of this disclosure, the performing radio link monitoring on a primary secondary cell (PSCell) may include: performing radio link monitoring on BWPs other than an activated DL BWP by the terminal equipment in a case where the network configures to perform radio link monitoring on a deactivated primary secondary cell. That is, the terminal equipment is not required to perform radio link monitoring on BWPs other than the activated DL BWP, unless the network configures performing radio link monitoring on the deactivated primary secondary cell.

For example, in the case where the network configures performing radio link monitoring on the deactivated primary secondary cell and no radio link failure of the primary secondary cell or a secondary cell group where the primary secondary cell is located is detected, the terminal equipment performs radio link monitoring on the BWPs other than the activated DL BWP.

In step 403,
In the embodiments of this disclosure, the stopping all other running timers than a first timer or stopping all running timers may include:
stopping all other running timers than the first timer when the network indicates that the secondary cell group supports radio link monitoring and/or beam failure detection and the primary secondary cell of the secondary cell group is configured with the reference signal for beam failure detection of a cell, the first timer including a TA timer and a beam failure detection timer associated with the primary secondary cell (such as beamFailureDetectionTimer).

In the embodiments of this disclosure, the TRP-specific beam failure detection timer may also be replaced with a beam failure detection timer with which a BFD-RS set is associated.

In the embodiments of this disclosure, the configuring a reference signal used for TRP-specific beam failure detection may also be replaced with configuring multiple (e.g. 2) BFD-RS sets.

In the embodiments of this disclosure, the cancelling triggered beam failure recovery (BFR) may include at least one of the following: cancelling beam failure recovery triggered by the primary secondary cell; and cancelling beam failure recovery triggered by a BFD-RS set of the primary secondary cell.

For example, in the case where the network indicates that the secondary cell group supports radio link monitoring and/or beam failure detection and the reference signal used for TRP-specific beam failure detection is configured for the primary secondary cell of the secondary cell group, beam failure detection of one BFD-RS set of the primary secondary cell is stopped.

In the embodiments of this disclosure, the first counter may be a counter of a beam failure indication, such as BFI_COUNTER.

In the embodiments of this disclosure, when indicated by the network, the first counter does not include BFI_COUNTER of the PSCell, or, in other words, the first counter excludes *BFI_*COUNTER of the PSCell.

For example, when indicated by the network, if the first counter is a counter of a beam failure indication, the first counter does not include BFI_COUNTER of the PSCell, or, in other words, the first counter excludes BFI_COUNTER of the PSCell.

In the case where the network indicates that the secondary cell group supports beam failure detection and the reference signal used for beam failure detection of a cell is configured for the primary secondary cell, when the secondary cell group is deactivated, beam failure detection of the primary secondary cell is performed.

In the embodiments of this disclosure, the reference signal used for beam failure detection of a cell or the reference signal used for TRP-specific beam failure detection configured for the primary secondary cell may be configured explicitly or implicitly. For example, the explicit configuration is indicated via RRC and/or MAC signaling, and the implicit configuration is determined by the terminal equipment by receiving a TCI state via a PDCCH.

In the embodiments of this disclosure, the configuring a reference signal used for beam failure detection of a cell for the the primary secondary cell means that no reference signal used for TRP-specific beam failure detection is configured for the primary secondary cell.

In the embodiments of this disclosure, the configuring a reference signal used for TRP-specific beam failure detection for the the primary secondary cell means that no reference signal used for beam failure detection of a cell is configured for the primary secondary cell.

In the embodiments of this disclosure, the performing beam failure detection of the primary secondary cell may include:
for each serving cell configured with beam failure detection, when a first counter is greater than or equal to a preset threshold, in a case where the serving cell is the primary secondary cell, the secondary cell group is deactivated and a beam failure of the primary secondary cell has not been indicated to the upper layer since the secondary cell group was deactivated, indicating a beam failure of the primary secondary cell by an MAC entity to an upper layer.

For example, the first counter is BFI_COUNTER, and the preset threshold is beamFailureInstanceMaxCount.

In the embodiments of this disclosure, the performing beam failure detection of the primary secondary cell may further include:
indicating a lower layer by the terminal equipment to stop beam failure detection on the primary secondary cell when the network does not configure a first parameter (for example, a value of bfd-and-RLM is "true") or when an indication from the MAC layer is received.

For example, the lower layer is the MAC layer or a physical layer or a radio frequency (RF) chain.

In the embodiments of this disclosure, the performing beam failure detection of the primary secondary cell may further include:
indicating the beam failure of the primary secondary cell by the MAC entity to the lower layer or indicating the lower layer by the MAC entity to stop beam failure detection on the primary secondary cell.

For example, the MAC entity indicates a beam failure to of the primary secondary cell to the upper layer, and upon receiving the indication of the MAC, the terminal equipment indicates the lower layer to stop beam failure detection on the primary secondary cell.

For example, the lower layer is a physical layer or a radio frequency chain.

In addition, the indication procedure above is also applicable to the case in step 404.

In step 404, when the network indicates that the secondary cell group supports beam failure detection and the reference signal used for TRP-specific beam failure detection is configured for the primary secondary cell, when the secondary cell group is deactivated, TRP-specific beam failure detection of the primary secondary cell is performed.

In the embodiments of this disclosure, the reference signal used for TRP-specific beam failure detection configured for the primary secondary cell may be configured explicitly or implicitly. For example, the implicit configuration is determined by receiving a TCI state via a PDCCH.

In the embodiments of this disclosure, the configuring a reference signal used for TRP-specific beam failure detection for the primary secondary cell means that no reference signal used for beam failure detection of a cell is configured for the primary secondary cell.

In the embodiments of this disclosure, step 404 may include at least one of the following:
during the deactivation of the secondary cell group, when a BFD-RS set on the primary secondary cell detects a beam failure, stopping beam failure detection of the BFD-RS set by the terminal equipment, or, during the deactivation of the secondary cell group, when a TRP on the primary secondary cell detects a beam failure, stopping beam failure detection of the TRP by the terminal equipment;
during the deactivation of the secondary cell group, in reconfiguring a reference signal of a BFD-RS set of the primary secondary cell, recovering beam failure detection of the BFD-RS set by the terminal equipment, such as reconfiguring a reference signal of a BFD-RS set of the primary secondary cell via RRC signaling and/or MAC signaling;
during the deactivation of the secondary cell group, when beam failure recovery is triggered by two BFD-RS sets on the primary secondary cell and has not been successfully completed, in a case where the MAC layer has not indicated beam failure to the upper layer since the secondary cell group is deactivated, indicating beam failure by the MAC layer to the upper layer; and
when an activation command of the secondary cell group is received from the network, in a case where beam failure is detected for both BFD-RS sets of the primary secondary cell, performing a random access procedure by the terminal equipment to the secondary cell group.

In the embodiments of this disclosure, "during the deactivation of the secondary cell group" may also be described as "if the secondary cell group is deactivated", " in a case where the secondary cell group is deactivated", or "when the secondary cell group is deactivated".

In the embodiments of this disclosure, the stopping all other running timers than a first timer or stopping all running timers may include:
stopping all other running timers than the first timer when the network indicates that the secondary cell group supports radio link monitoring and/or beam failure detection and the primary secondary cell of the secondary cell group is configured with the reference signal for beam failure detection of a cell, the first timer including a TA timer and a beam failure detection timer associated with the primary secondary cell (such as beamFailureDetectionTimer); and/or
stopping all other running timers than the first timer when the network indicates that the secondary cell group supports radio link monitoring and/or beam failure detection and the primary secondary cell of the secondary cell group is configured with the reference signal for TRP-specific beam failure detection, the first timer comprising a TA timer and a beam failure detection timer associated with the primary secondary cell or a beam failure detection timer specific for each TRP of the primary secondary cell (such as beamFailureDetectionTimer).

In the embodiments of this disclosure, the beam failure detection timer specific to TRP may also be replaced with a beam failure detection timer with which a BFD-RS set is associated.

In the embodiments of this disclosure, the configuring a reference signal used for TRP-specific beam failure detection may also be replaced with configuring multiple (e.g. 2) BFD-RS sets.

In the embodiments of this disclosure, the cancelling triggered beam failure recovery (BFR) may include at least one of the following: cancelling beam failure recovery triggered by the primary secondary cell; cancelling beam failure recovery triggered by a BFD-RS set of the primary secondary cell; not cancelling beam failure recovery triggered by a BFD-RS set of the primary secondary cell; and stopping beam failure detection of one BFD-RS set of the primary secondary cell.

For example, in the case where the network indicates that the secondary cell group supports radio link monitoring and/or beam failure detection and the reference signal used for TRP-specific beam failure detection is configured for the primary secondary cell of the secondary cell group, the beam failure recovery triggered by one BFD-RS set of the primary secondary cell is not cancelled and/or the beam failure detection of one BFD-RS set of the primary secondary cell is stopped.

For example, in the case where the network indicates that the secondary cell group supports radio link monitoring and/or beam failure detection, the reference signal used for TRP-specific beam failure detection is configured for the primary secondary cell of the secondary cell group and one and only one BFD-RS set of the primary secondary cell triggers beam failure recovery, the beam failure recovery triggered by the BFD-RS set of the primary secondary cell is not cancelled and/or beam failure detection of the BFD-RS set of the primary secondary cell is stopped.

In the embodiments of this disclosure, the first counter may be a counter of a beam failure indication, such as BFI_COUNTER.

In the embodiments of this disclosure, corresponding to step 403, when indicated by the network, the first counter does not include BFI_COUNTER of the PSCell, or, in other words, the first counter excludes BFI_COUNTER of the PSCell.

For example, when indicated by the network, if the first counter is a counter of a beam failure indication, the first counter does not include BFI_COUNTER of the PSCell, or, in other words, the first counter excludes BFI_COUNTER of the PSCell.

In the embodiments of this disclosure, corresponding to step 404, when indicated by the network, the first counter does not include BFI_COUNTER of the PSCell, or, in other words, the first counter excludes *BFI_*COUNTER of the PSCell; and/or, when indicated by the network, the first counter does not include BFI_COUNTER with which each BFD-RS set of the PSCell is associated, or, in other words, BFI_COUNTER with which each BFD-RS set of the PSCell is associated is excluded.

For example, when indicated by the network, if the first counter is a counter of a beam failure indication, the first counter does not include BFI_COUNTER of the PSCell, or, in other words, the first counter excludes BFI_COUNTER of the PSCell; and/or, when indicated by the network, if the first counter is a counter of a beam failure indication, the first counter does not include BFI_COUNTER with which each BFD-RS set of the PSCell is associated, or, in other words, BFI_COUNTER with which each BFD-RS set of the PSCell is associated is excluded.

In the embodiments of this disclosure, the performing TRP-specific beam failure detection of the primary secondary cell may include:
when the serving cell is configured with two BFD-RS sets, in a case where beam failure recovery is triggered for two BFD-RS sets of a special cell and has not been successfully completed for each BFD-RS set of the serving cell,
when the serving cell is the primary secondary cell, a secondary cell group in which the special cell is located is deactivated and a beam failure of the primary secondary cell has not been indicated to the upper layer since the secondary cell group was deactivated, indicating a beam failure of the primary secondary cell by the MAC entity to the upper layer.

In the embodiments of this disclosure, the performing TRP-specific beam failure detection of the primary secondary cell may further include:
indicating the lower layer by the terminal equipment to stop beam failure detection on the primary secondary cell when the network does not configure the first parameter (for example, a value of "bfd-and-RLM" is "true") or when an indication is received from the MAC layer.

For example, the lower layer is an MAC layer or a physical layer or a radio frequency chain.

In the embodiments of this disclosure, the performing beam failure detection of the primary secondary cell may further include:
indicating the beam failure of the primary secondary cell to the lower layer or indicating the lower layer to stop beam failure detection on the primary secondary cell, by the MAC entity.

For example, the lower layer is a physical layer or a radio frequency chain.

In the embodiments of this disclosure, the performing TRP-specific beam failure detection of the primary secondary cell may further include:
when the serving cell is configured with two BFD-RS sets, in a case where beam failure recovery is triggered for two BFD-RS sets of a special cell and has not been successfully completed for each BFD-RS set of the serving cell,
when the serving cell is not the primary secondary cell, or a secondary cell group in which the special cell is located is not deactivated, or a beam failure of the primary secondary cell has been indicated to the upper layer since the secondary cell group is deactivated, initiating a random access procedure by the MAC entity on the primary secondary cell.

That is, if the serving cell is configured with 2 BFD-RS sets, beam failure recovery is triggered in two BFD-RS sets in the special cell and has not been successfully completed for each BFD-RS set of the serving cell,

If the serving cell is the primary secondary cell, the secondary cell group where the special cell is located is deactivated and the beam failure of the primary secondary cell has not been indicated to a higher layer since the secondary cell group is deactivated, the MAC entity indicates the beam failure of the primary secondary cell to the upper layer; otherwise, the MAC entity initiates a random access procedure on the primary secondary cell.

In the embodiments of this disclosure, that the serving cell is not the primary secondary cell may be replaced with that the serving cell is a primary cell.

In the embodiments of this disclosure, that the secondary cell group where the special cell is located is not deactivated may be replaced with that the secondary cell group where the special cell is located is active.

In the embodiments of this disclosure, the performing TRP-specific beam failure detection of the primary secondary cell may further include:
when the serving cell is configured with two BFD-RS sets, in a case where a beam failure recovery procedure determines that at least one beam failure recovery has been triggered and not cancelled for one and only one BFD-RS set of a primary secondary cell (for example, evaluation of its candidate beams has been completed) for each BFD-RS set of the serving cell,
when the serving cell is the primary secondary cell and the secondary cell group is deactivated, indicating a beam failure of the BFD-RS set of the primary secondary cell by the MAC entity to the upper layer.

In the embodiments of this disclosure, the performing TRP-specific beam failure detection of the primary secondary cell may further include:
when the indication is received, indicating by the terminal equipment that the lower layer stops beam failure detection of the BFD-RS set on the primary secondary cell.

For example, the lower layer is an MAC layer or a physical layer or a radio frequency chain.

In the embodiments of this disclosure, the performing TRP-specific beam failure detection of the primary secondary cell may further include:
when the serving cell is configured with two BFD-RS sets, in a case where a beam failure recovery procedure determines that at least one beam failure recovery has been triggered and not cancelled for one and only one BFD-RS set of a primary secondary cell for each BFD-RS set of the serving cell,
when the serving cell is the primary secondary cell and the secondary cell group is deactivated, indicating a beam failure of the BFD-RS set of the primary secondary cell by the MAC entity to the lower layer or indicating the primary secondary cell by the MAC entity to stop beam failure detection of the BFD-RS set on the primary secondary cell.

For example, the lower layer is a physical layer or a radio frequency chain.

In the embodiments of this disclosure, the performing TRP-specific beam failure detection of the primary secondary cell may include:
when the serving cell is configured with two BFD-RS sets, in a case where a beam failure recovery procedure determines that at least one beam failure recovery has been triggered and not cancelled for one and only one BFD-RS set of a primary secondary cell for each BFD-RS set of the serving cell,
when the serving cell is not the primary secondary cell, or when the secondary cell group is not deactivated, indicating a multiplexing and assembling procedure by the MAC entity to generate an enhanced BFR MAC CE or a truncated enhanced BFR MAC CE or trigger an SR.

That is, if the serving cell is configured with 2 BFD-RS sets, if it is determined in the beam failure recovery procedure that at least one piece of beam failure recovery is triggered for one and only one BFD-RS set of a primary secondary cell and has not been cancelled for each BFD-RS set of the serving cell,
if the serving cell is the primary secondary cell and the secondary cell group is deactivated, the MAC entity indicates the beam failure of the BFD-RS set of the primary secondary cell to the upper layer; otherwise, the MAC entity the multiplexing and assembling procedure to generate an enhanced BFR MAC CE or a truncated enhanced BFR MAC CE or trigger an SR.

In the embodiments of this disclosure, that the serving cell is not the primary or secondary cell may be replaced with that the serving cell is a primary cell.

In the embodiments of this disclosure, that the secondary cell group is not deactivated may be replaced with that the secondary cell group is active.

In the embodiments of this disclosure, the stopping beam failure detection may include: stopping beam failure detection by the MAC entity or the lower layer, that is, the MAC entity or the lower layer stops performing beam failure detection or starts beam failure detection.

For example, the MAC entity does not calculate a beam failure instance indication from the lower layer, that is, the MAC entity does not perform the beam failure instance indication from the lower layer or starts to calculate the beam failure instance indication from lower layer.

For example, the lower layer does not perform measurement and/or evaluation on radio link quality, that is, the lower layer does not perform measurement and/or evaluation on radio link quality or starts to perform measurement and/or evaluation on radio link quality.

In the embodiments of this disclosure, the recovery beam failure detection may include: recovering beam failure detection by the MAC entity or the lower layer, i.e. recovering performing beam failure detection or starting beam failure detection by the MAC entity or the lower layer.

For example, MAC entity recovers calculating a beam failure instance indication from the lower layer, that is, the MAC entity recovers calculating a beam failure instance indication from the lower layer or starts to calculate a beam failure instance indication from the lower layer.

For example, the lower layer recovers performing measurement and/or evaluation on radio link quality, that is, the lower layer recovers performing measurement and/or evaluation on radio link quality or starts to perform measurement and/or evaluation on radio link quality.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 2

The embodiment of this disclosure provides a method for evaluating downlink radio link quality. The method is applicable to a terminal equipment and corresponds to the method for evaluating downlink radio link quality applicable to a terminal equipment described in embodiment 1, and shall be described from a different angle of view. For example, this method is applicable to the terminal equipment 102 in FIGs. 2 and 3.

FIG. 5 is a schematic diagram of the method for evaluating downlink radio link quality of embodiment 2 of this disclosure. As shown in FIG. 5, the method includes:
step 501: configuring a secondary cell group (SCG);
step 502: in a case where a network does not indicate that the secondary cell group supports radio link monitoring (RLM), when the secondary cell group is deactivated, stopping radio link monitoring on a primary secondary cell (PSCell); and/or,
step 503: in a case where the network does not indicate that the secondary cell group supports beam failure detection, or the primary secondary cell is not configured with a reference signal used for beam failure detection of a cell, when the secondary cell group is deactivated, stopping beam failure detection on the primary secondary cell; and/or,
step 504: in a case where the network does not configure that the secondary cell group supports beam failure detection or does not configure the primary secondary cell with a reference signal for TRP-specific beam failure detection, when the secondary cell group is deactivated, stopping TRP-specific beam failure detection on the primary secondary cell.

In the embodiments of this disclosure, after step 501, the method may include at least one of steps 502-504, and when multiple steps in steps 502-504 are included, an order of executing these steps is not limited.

In the embodiments of this disclosure, "TRP-specific' may be replaced with "of a BFD-RS set' or "with which a BFD-RS set is associated".

In the embodiments of this disclosure, "a beam failure' may be replaced with 'beam failure recovery" or "beam failure recovery is triggered".

In step 501, configuring a secondary cell group (SCG) refers to that the terminal equipment configures a secondary cell group.

In the embodiments of this disclosure, the primary secondary cell is a primary secondary cell with a secondary cell group configured by the terminal equipment.

In the embodiments of this disclosure, for the configured secondary cell group, when the upper layer indicates activation of the secondary cell group, the MAC entity will apply at least one of the following secondary cell group activation operations: activating the primary secondary cell; SRS transmission on the primary secondary cell; CSI reporting on the primary secondary cell; PDCCH monitoring on the primary secondary cell; PUCCH transmission on the primary secondary cell; if triggered, performing random access on the primary secondary cell; and initializing Bj of each logical channel with which the primary secondary cell is associated to be 0.

In the embodiments of this disclosure, for the configured secondary cell group, when the upper layer indicates that the secondary cell group is deactivated, the MAC entity will perform at least one of the following: deactivating all secondary cells (SCells) of the configured secondary cell group; deactivating the primary secondary cell; and resetting MAC.

In the embodiments of this disclosure, the resetting MAC includes at least one of the following: stopping all other running timers than a first timer or stopping all running timers; stopping an ongoing random access procedure; clearing an Msg3 buffer; clearing an MSGA buffer; cancelling triggered beam failure recovery (BFR); and resetting a first counter.

In the embodiments of this disclosure, the stopping all other running timers than a first timer or stopping all running timers may include:
stopping all other running timers than the first timer when the network indicates that the secondary cell group supports radio link monitoring and/or beam failure detection and the primary secondary cell of the secondary cell group is configured with the reference signal for beam failure detection of a cell, the first timer including a TA timer and a beam failure detection timer associated with the primary secondary cell (such as beamFailureDetectionTimer); and/or
stopping all other running timers than the first timer when the network indicates that the secondary cell group supports radio link monitoring and/or beam failure detection and the primary secondary cell of the secondary cell group is configured with the reference signal for TRP-specific beam failure detection, the first timer including a TA timer and a beam failure detection timer associated with the primary secondary cell or a beam failure detection timer specific for each TRP of the primary secondary cell (such as beamFailureDetectionTimer).

In the embodiments of this disclosure, the beam failure detection timer specific to TRP may also be replaced with a beam failure detection timer with which a BFD-RS set is associated.

In the embodiments of this disclosure, the configuring a reference signal used for TRP-specific beam failure detection may also be replaced with configuring multiple (e.g. 2) BFD-RS sets.

In the embodiments of this disclosure, the cancelling triggered beam failure recovery (BFR) may include at least one of the following: cancelling beam failure recovery triggered by the primary secondary cell; cancelling beam failure recovery triggered by a BFD-RS set of the primary secondary cell; not cancelling beam failure recovery triggered by a BFD-RS set of the primary secondary cell; and stopping beam failure detection of one BFD-RS set of the primary secondary cell.

For example, in the case where the network indicates that the secondary cell group supports radio link monitoring and/or beam failure detection and the reference signal used for TRP-specific beam failure detection is configured for the primary secondary cell of the secondary cell group, the beam failure recovery triggered by one BFD-RS set of the primary secondary cell is not cancelled and/or the beam failure detection of one BFD-RS set of the primary secondary cell is stopped.

For example, in the case where the network indicates that the secondary cell group supports radio link monitoring and/or beam failure detection, the reference signal used for TRP-specific beam failure detection is configured for the primary secondary cell of the secondary cell group and one and only one BFD-RS set of the primary secondary cell triggers beam failure recovery, the beam failure recovery triggered by the BFD-RS set of the primary secondary cell is not cancelled and/or beam failure detection of the BFD-RS set of the primary secondary cell is stopped.

In the embodiments of this disclosure, the first counter may be a counter of a beam failure indication, such as BFI_COUNTER.

In the embodiments of this disclosure, the resetting the first counter may include:
in a case where the network does not configure that the secondary cell group supports beam failure detection and does not configure a reference signal used for TRP-specific beam failure detection, resetting the first counter with which the primary secondary cell group is associated;
   and/or,
in a case where the network does not configure that the secondary cell group supports beam failure detection and configures a reference signal used for TRP-specific beam failure detection, resetting the first counter with which the primary secondary cell or each BFD-RS set of the primary secondary cell is associated.

In the embodiments of this disclosure, the stopping beam failure detection may include: stopping beam failure detection by the MAC entity or the lower layer, that is, the MAC entity or the lower layer stops performing beam failure detection or starts beam failure detection.

For example, the MAC entity does not calculate a beam failure instance indication from the lower layer, that is, the MAC entity does not perform the beam failure instance indication from the lower layer or starts to calculate the beam failure instance indication from lower layer.

For example, the lower layer does not perform measurement and/or evaluation on radio link quality, that is, the lower layer does not perform measurement and/or evaluation on radio link quality or starts to perform measurement and/or evaluation on radio link quality.

In the embodiments of this disclosure, the recovering beam failure detection may include: recovering beam failure detection by the MAC entity or the lower layer, that is, the MAC entity or the lower layer recovers performing beam failure detection or starts beam failure detection.

For example, MAC entity recovers calculating a beam failure instance indication from the lower layer, that is, the MAC entity recovers calculating a beam failure instance indication from the lower layer or starts to calculate a beam failure instance indication from the lower layer.

For example, the lower layer recovers performing measurement and/or evaluation on radio link quality, that is, the lower layer recovers performing measurement and/or evaluation on radio link quality or starts to perform measurement and/or evaluation on radio link quality.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 3

The embodiment of this disclosure provides a method for evaluating downlink radio link quality. The method is applicable to a network device and a terminal equipment and corresponds to the method for evaluating downlink radio link quality applicable to a terminal equipment described in embodiment 1 and the method for evaluating downlink radio link quality applicable to a terminal equipment described in embodiment 6, with identical contents being not going to be described herein any further.

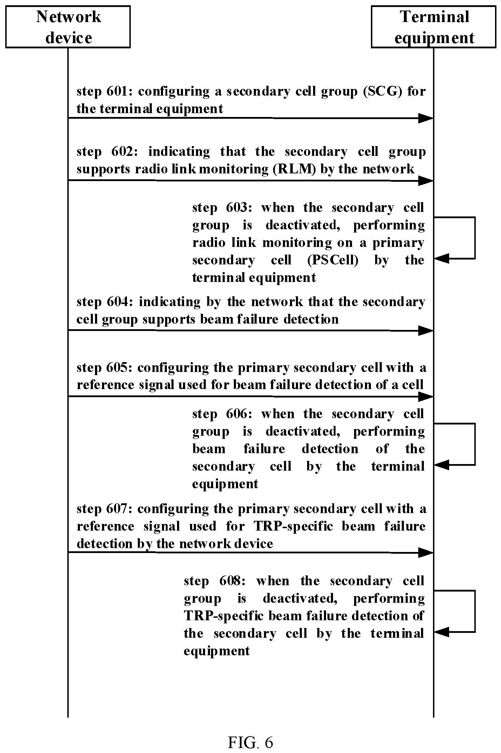

FIG. 6 is a schematic diagram of the method for evaluating downlink radio link quality of embodiment 3 of this disclosure. As shown in FIG. 6, the method includes:
step 601: configuring a secondary cell group (SCG) for the terminal equipment;
step 602: indicating that the secondary cell group supports radio link monitoring (RLM) by the network;
step 603: when the secondary cell group is deactivated, performing radio link monitoring on a primary secondary cell (PSCell) by the terminal equipment;
step 604: indicating by the network that the secondary cell group supports beam failure detection;
step 605: configuring the primary secondary cell with a reference signal used for beam failure detection of a cell;
step 606: when the secondary cell group is deactivated, performing beam failure detection of the secondary cell by the terminal equipment;
step 607: configuring the primary secondary cell with a reference signal used for TRP-specific beam failure detection by the network device; and
step 608: when the secondary cell group is deactivated, performing TRP-specific beam failure detection of the secondary cell by the terminal equipment.

In the embodiments of this disclosure, the method may include at least one group of steps 602-603, steps 604-606 and steps 604, 607-608, and when multiple groups in groups of steps 602-603, steps 604-606 and steps 604, 607-608 are included, an order of executing these groups is not limited. In each group, that is, in steps 602-603, in steps 604-606 and in steps 604, 607-608, each step may be executed sequentially or may be executed in a combined manner, that is, an order of executing the steps in the groups is not limited. For example, for steps 604 and 605, step 604 may be executed first, and then step 605 is executed, or step 605 may be executed first, and then step 604 is executed, or the two steps may be executed simultaneously, or they may be combined into one step and then executed.

In the embodiment of this disclosure, reference may be made to what is described in embodiment 1 for particular implementations of steps 601-608, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 4

The embodiment of this disclosure provides a method for evaluating downlink radio link quality, applicable to a terminal equipment. For example, this method is applicable to the terminal equipment 102 in FIGs. 2 and 3.

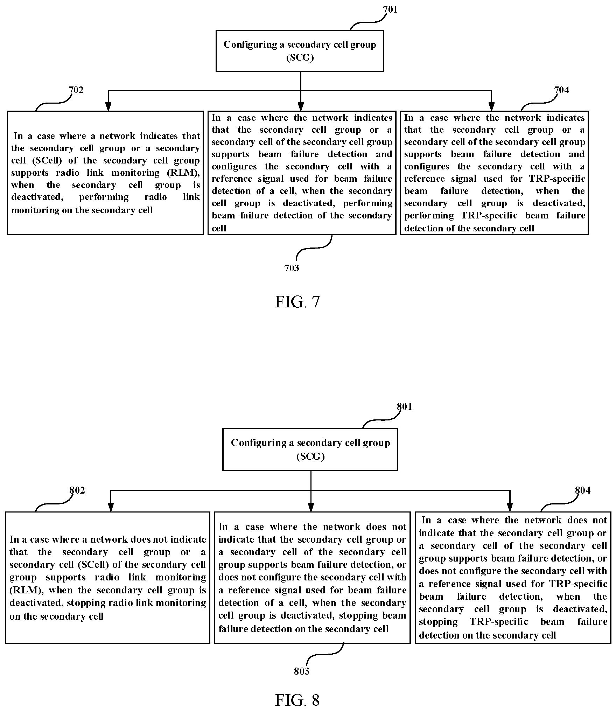

FIG. 7 is a schematic diagram of the method for evaluating downlink radio link quality of embodiment 4 of this disclosure. As shown in FIG. 7, the method includes:
step 701: configuring a secondary cell group (SCG);
step 702: in a case where a network indicates that the secondary cell group or a secondary cell (SCell) of the secondary cell group supports radio link monitoring (RLM), when the secondary cell group is deactivated, performing radio link monitoring on the secondary cell; and/or,
step 703: in a case where the network indicates that the secondary cell group or a secondary cell of the secondary cell group supports beam failure detection and configures the secondary cell with a reference signal used for beam failure detection of a cell, when the secondary cell group is deactivated, performing beam failure detection of the secondary cell; and/or,
step 704: in a case where the network indicates that the secondary cell group or a secondary cell of the secondary cell group supports beam failure detection and configures the secondary cell with a reference signal used for TRP-specific beam failure detection, when the secondary cell group is deactivated, performing TRP-specific beam failure detection of the secondary cell.

In the embodiment of this disclosure, after step 701, the method may include at least one of steps 702-704, and when multiple steps in steps 702-704 are included, an order of executing these steps is not limited.

FIG. 8 is another schematic diagram of the method for evaluating downlink radio link quality of embodiment 4 of this disclosure. As shown in FIG. 8, the method includes:
step 801: configuring a secondary cell group (SCG);
step 802: in a case where a network does not indicate that the secondary cell group or a secondary cell (SCell) of the secondary cell group supports radio link monitoring (RLM), when the secondary cell group is deactivated, stopping radio link monitoring on the secondary cell; and/or,
step 803: in a case where the network does not indicate that the secondary cell group or a secondary cell of the secondary cell group supports beam failure detection, or does not configure the secondary cell with a reference signal used for beam failure detection of a cell, when the secondary cell group is deactivated, stopping beam failure detection on the secondary cell; and/or,
step 804: in a case where the network does not indicate that the secondary cell group or a secondary cell of the secondary cell group supports beam failure detection, or does not configure the secondary cell with a reference signal used for TRP-specific beam failure detection, when the secondary cell group is deactivated, stopping TRP-specific beam failure detection on the secondary cell.

In the embodiment of this disclosure, after step 801, the method may include at least one of steps 802-804, and when multiple steps in steps 802-804 are included, an order of executing these steps is not limited.

Different from embodiments 1-3, embodiment 4 is directed radio link monitoring and/or beam failure detection on the secondary cell, and other contents are similar to those in embodiments 1-3. Reference may be made to what is described in embodiments 1-3 for particular contents of the above steps, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality.

### Embodiment 5

The embodiment of this disclosure provides a method for evaluating downlink radio link quality, applicable to a terminal equipment. For example, this method is applicable to the terminal equipment 102 in FIGs. 2 and 3.

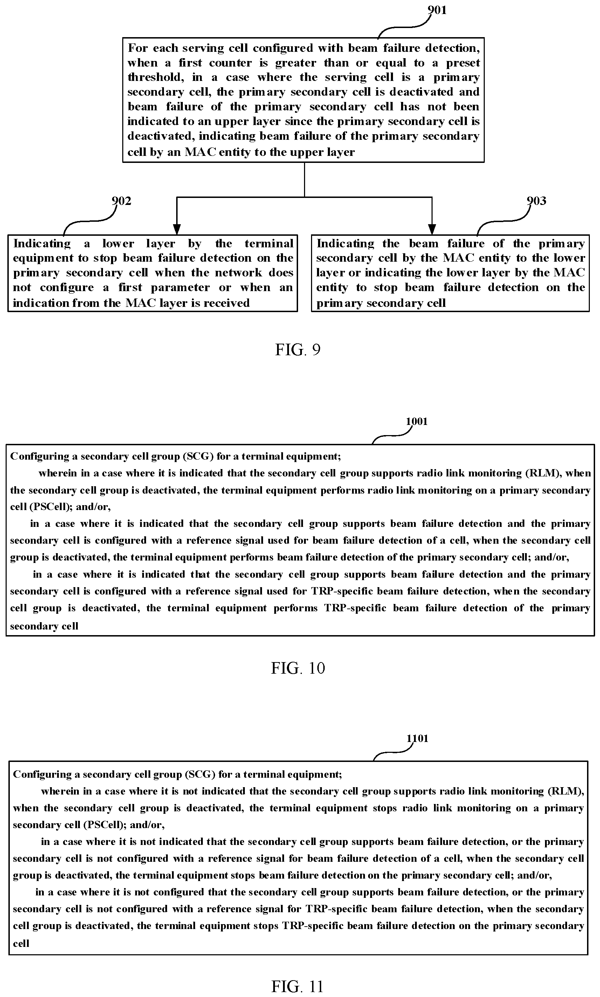

FIG. 9 is a schematic diagram of the method for evaluating downlink radio link quality of embodiment 5 of this disclosure. As shown in FIG. 9, the method includes:
step 901: for each serving cell configured with beam failure detection, when a first counter is greater than or equal to a preset threshold, in a case where the serving cell is a primary secondary cell, the primary secondary cell is deactivated and beam failure of the primary secondary cell has not been indicated to an upper layer since the primary secondary cell is deactivated, indicating beam failure of the primary secondary cell by an MAC entity to the upper layer.

For example, the first counter is BFI_COUNTER, and a preset threshold thereof is beamFailureInstanceMaxCount.

In the embodiments of this disclosure, as shown in FIG. 9, the method may further include:
step 902: indicating a lower layer by the terminal equipment to stop beam failure detection on the primary secondary cell when the network does not configure a first parameter (for example, a value of bfd-and-RLM is "true") or when an indication from the MAC layer is received.

For example, the lower layer is an MAC layer or a physical layer or a radio frequency chain (RF chain).

In the embodiments of this disclosure, as shown in FIG. 9, the method may further include:
step 903: indicating the beam failure of the primary secondary cell by the MAC entity to the lower layer or indicating the lower layer by the MAC entity to stop beam failure detection on the primary secondary cell.

For example, the lower layer is a physical layer or a radio frequency chain.

Reference may be made to what is described in embodiment 1 for particular contents of the above steps, which shall not be repeated herein any further.

### Embodiment 6

The embodiment of this disclosure provides a method for evaluating downlink radio link quality. The method is applied to a network device and corresponds to the method described in embodiment 1, with identical contents being not going to be described herein any further.

FIG. 10 is a schematic diagram of the method for evaluating downlink radio link quality of embodiment 6 of this disclosure. As shown in FIG. 10, the method includes:
step 1001: configuring a secondary cell group (SCG) for a terminal equipment;
wherein in a case where it is indicated that the secondary cell group supports radio link monitoring (RLM), when the secondary cell group is deactivated, the terminal equipment performs radio link monitoring on a primary secondary cell (PSCell); and/or,
in a case where it is indicated that the secondary cell group supports beam failure detection and a primary secondary cell is configured with a reference signal used for beam failure detection of a cell, when the secondary cell group is deactivated, the terminal equipment performs beam failure detection of the primary secondary cell; and/or,
in a case where it is indicated that the secondary cell group supports beam failure detection and a primary secondary cell is configured with a reference signal used for TRP-specific beam failure detection, when the secondary cell group is deactivated, the terminal equipment performs TRP-specific beam failure detection of the primary secondary cell.

Reference may be made to what is described in embodiment 1 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 7

The embodiment of this disclosure provides a method for evaluating downlink radio link quality. The method is applicable to a network device and corresponds to the method described in embodiment 2, with identical contents being not going to be described herein any further.

FIG. 11 is a schematic diagram of the method for evaluating downlink radio link quality of embodiment 7 of this disclosure. As shown in FIG. 11, the method includes:
step 1101: configuring a secondary cell group (SCG) for a terminal equipment;
wherein in a case where it is not indicated that the secondary cell group supports radio link monitoring (RLM), when the secondary cell group is deactivated, the terminal equipment stops radio link monitoring on a primary secondary cell (PSCell); and/or,
in a case where it is not indicated that the secondary cell group supports beam failure detection, or the primary secondary cell is not configured with a reference signal for beam failure detection of a cell, when the secondary cell group is deactivated, the terminal equipment stops beam failure detection on the primary secondary cell; and/or,
in a case where it is not configured that the secondary cell group supports beam failure detection, or the primary secondary cell is not configured with a reference signal for TRP-specific beam failure detection, when the secondary cell group is deactivated, the terminal equipment stops TRP-specific beam failure detection on the primary secondary cell.

Reference may be made to what is described in embodiment 2 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 8

The embodiment of this disclosure provides a method for evaluating downlink radio link quality. The method is applicable to a network device and corresponds to the method described in embodiment 4, with identical contents being not going to be described herein any further.

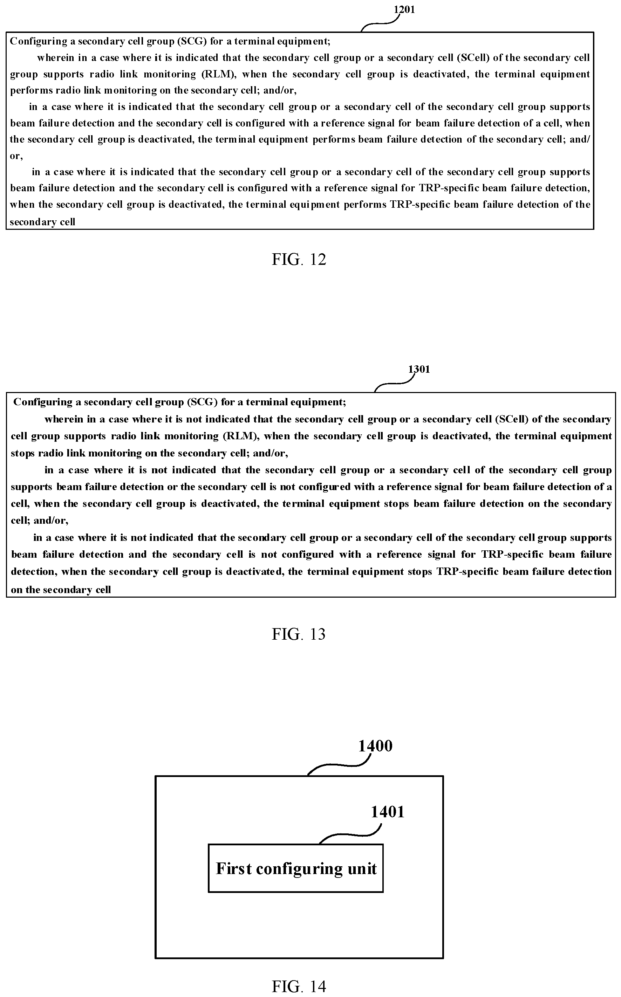

FIG. 12 is a schematic diagram of the method for evaluating downlink radio link quality of embodiment 8 of this disclosure. As shown in FIG. 12, the method includes:
step 1201: configuring a secondary cell group (SCG) for a terminal equipment;
wherein in a case where it is indicated that the secondary cell group or a secondary cell (SCell) of the secondary cell group supports radio link monitoring (RLM), when the secondary cell group is deactivated, the terminal equipment performs radio link monitoring on the secondary cell; and/or,
in a case where it is indicated that the secondary cell group or a secondary cell of the secondary cell group supports beam failure detection and the secondary cell is configured with a reference signal for beam failure detection of a cell, when the secondary cell group is deactivated, the terminal equipment performs beam failure detection of the secondary cell; and/or,
in a case where it is indicated that the secondary cell group or a secondary cell of the secondary cell group supports beam failure detection and the secondary cell is configured with a reference signal for TRP-specific beam failure detection, when the secondary cell group is deactivated, the terminal equipment performs TRP-specific beam failure detection of the secondary cell.

FIG. 13 is another schematic diagram of the method for evaluating downlink radio link quality of embodiment 8 of this disclosure. As shown in FIG. 13, the method includes:
step 1301: configuring a secondary cell group (SCG) for a terminal equipment;
wherein in a case where it is not indicated that the secondary cell group or a secondary cell (SCell) of the secondary cell group supports radio link monitoring (RLM), when the secondary cell group is deactivated, the terminal equipment stops radio link monitoring on the secondary cell; and/or,
in a case where it is not indicated that the secondary cell group or a secondary cell of the secondary cell group supports beam failure detection or the secondary cell is not configured with a reference signal for beam failure detection of a cell, when the secondary cell group is deactivated, the terminal equipment stops beam failure detection on the secondary cell; and/or,
in a case where it is not indicated that the secondary cell group or a secondary cell of the secondary cell group supports beam failure detection and the secondary cell is not configured with a reference signal for TRP-specific beam failure detection, when the secondary cell group is deactivated, the terminal equipment stops TRP-specific beam failure detection on the secondary cell.

Reference may be made to what is described in embodiment 4 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality.

### Embodiment 9

The embodiment of this disclosure provides an apparatus for evaluating downlink radio link quality, applicable to a terminal equipment. As a principle of the apparatus for solving problems is similar to that of the method in embodiment 1, reference may be made to the implementation of the method described in embodiment 1 for implementation of the apparatus, with identical or related contents being not going to be described herein any further.

FIG. 14 is a schematic diagram of the apparatus for evaluating downlink radio link quality of embodiment 9 of this disclosure. As shown in FIG. 14, an apparatus 1400 includes:
a first configuring unit 1401 configured to configure a secondary cell group (SCG);
wherein in a case where a network indicates that the secondary cell group supports radio link monitoring (RLM), when the secondary cell group is deactivated, the terminal equipment performs radio link monitoring on a primary secondary cell (PSCell); and/or,
in a case where the network indicates that the secondary cell group supports beam failure detection and a primary secondary cell is configured with a reference signal for beam failure detection of a cell, when the secondary cell group is deactivated, the terminal equipment performs beam failure detection of the primary secondary cell; and/or,
in a case where the network indicates that the secondary cell group supports beam failure detection and a primary secondary cell is configured with a reference signal for TRP-specific beam failure detection, when the secondary cell group is deactivated, the terminal equipment performs TRP-specific beam failure detection of the primary secondary cell.

Reference may be made to what is described in embodiment 1 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 10

The embodiment of this disclosure provides an apparatus for evaluating downlink radio link quality, applicable to a terminal equipment. As a principle of the apparatus for solving problems is similar to that of the method in embodiment 2, reference may be made to the implementation of the method described in embodiment 2 for implementation of the apparatus, with identical or related contents being not going to be described herein any further.

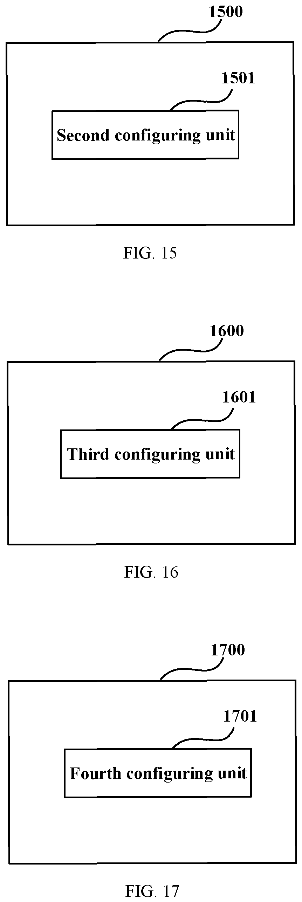

FIG. 15 is a schematic diagram of the apparatus for evaluating downlink radio link quality of embodiment 10 of this disclosure. As shown in FIG. 15, an apparatus 1500 includes:
a second configuring unit 1501 configured to configure a secondary cell group (SCG);
wherein in a case where a network does not indicate that the secondary cell group supports radio link monitoring (RLM), when the secondary cell group is deactivated, the terminal equipment stops radio link monitoring on a primary secondary cell (PSCell); and/or,
in a case where the network does not indicate that the secondary cell group supports beam failure detection, or does not configure the primary secondary cell with a reference signal used for beam failure detection of a cell, when the secondary cell group is deactivated, the terminal equipment stops beam failure detection on the primary secondary cell; and/or,
in a case where the network does not configure that the secondary cell group supports beam failure detection or does not configure the primary secondary cell with a reference signal for TRP-specific beam failure detection, when the secondary cell group is deactivated, the terminal equipment stops TRP-specific beam failure detection on the primary secondary cell.

Reference may be made to what is described in embodiment 2 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 11

The embodiment of this disclosure provides an apparatus for evaluating downlink radio link quality, applicable to a terminal equipment. As a principle of the apparatus for solving problems is similar to that of the method in embodiment 4, reference may be made to the implementation of the method described in embodiment 4 for implementation of the apparatus, with identical or related contents being not going to be described herein any further.

FIG. 16 is a schematic diagram of the apparatus for evaluating downlink radio link quality of embodiment 11 of this disclosure. As shown in FIG. 16, an apparatus 1600 includes:
a third configuring unit 1601 configured to configure a secondary cell group (SCG);
wherein in a case where a network indicates that the secondary cell group or a secondary cell (SCell) of the secondary cell group supports radio link monitoring (RLM), when the secondary cell group is deactivated, the terminal equipment performs radio link monitoring on the secondary cell; and/or,
in a case where the network indicates that the secondary cell group or a secondary cell of the secondary cell group supports beam failure detection and configures the secondary cell with a reference signal used for beam failure detection of a cell, when the secondary cell group is deactivated, the terminal equipment performs beam failure detection on the secondary cell; and/or,
in a case where the network indicates that the secondary cell group or a secondary cell of the secondary cell group supports beam failure detection and configures the secondary cell with a reference signal used for TRP-specific beam failure detection, when the secondary cell group is deactivated, the terminal equipment performs TRP-specific beam failure detection of the secondary cell.

FIG. 17 is another schematic diagram of the apparatus for evaluating downlink radio link quality of embodiment 11 of this disclosure. As shown in FIG. 17, an apparatus 1700 includes:
a fourth configuring unit 1701 configured to configure a secondary cell group (SCG);
wherein in a case where a network does not indicate that the secondary cell group or a secondary cell (SCell) of the secondary cell group supports radio link monitoring (RLM), when the secondary cell group is deactivated, the terminal equipment stops radio link monitoring on the secondary cell; and/or,
in a case where the network does not indicate that the secondary cell group or a secondary cell of the secondary cell group supports beam failure detection, or does not configure the secondary cell with a reference signal used for beam failure detection of a cell, when the secondary cell group is deactivated, the terminal equipment stops beam failure detection on the secondary cell; and/or,
in a case where the network does not indicate that the secondary cell group or a secondary cell of the secondary cell group supports beam failure detection, or does not configure the secondary cell with a reference signal used for TRP-specific beam failure detection, when the secondary cell group is deactivated, the terminal equipment stops TRP-specific beam failure detection on the secondary cell.

Reference may be made to what is described in embodiment 4 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality.

### Embodiment 12

The embodiment of this disclosure provides an apparatus for evaluating downlink radio link quality, applicable to a terminal equipment. As a principle of the apparatus for solving problems is similar to that of the method in embodiment 5, reference may be made to the implementation of the method described in embodiment 5 for implementation of the apparatus, with identical or related contents being not going to be described herein any further.

Wherein, for each serving cell configured with beam failure detection, when a first counter is greater than or equal to a preset threshold, in a case where the serving cell is a primary secondary cell, the primary secondary cell is deactivated and beam failure of the primary secondary cell has not been indicated to an upper layer since the primary secondary cell is deactivated, an MAC entity indicates beam failure of the primary secondary cell to the upper layer.

### Embodiment 13

The embodiment of this disclosure provides an apparatus for evaluating downlink radio link quality. The apparatus is applicable to a network device and corresponds to the method described in embodiment 6, with identical or related contents being not going to be described herein any further.

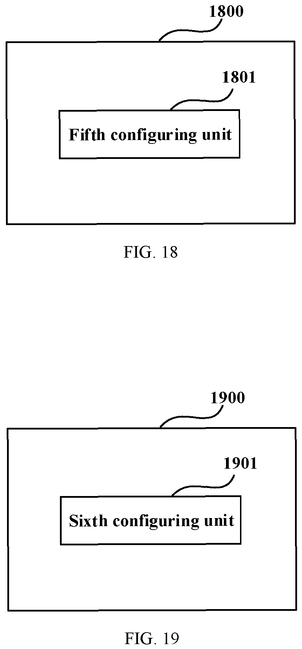

FIG. 18 is a schematic diagram of the apparatus for evaluating downlink radio link quality of embodiment 13 of this disclosure. As shown in FIG. 18, an apparatus 1800 includes:
a fifth configuring unit 1801 configured to configure a secondary cell group (SCG) for a terminal equipment;
wherein in a case where it is indicated that the secondary cell group supports radio link monitoring (RLM), when the secondary cell group is deactivated, the terminal equipment performs radio link monitoring on a primary secondary cell (PSCell); and/or,
in a case where it is indicated that the secondary cell group supports beam failure detection and a primary secondary cell is configured with a reference signal used for beam failure detection of a cell, when the secondary cell group is deactivated, the terminal equipment performs beam failure detection of the primary secondary cell; and/or,
in a case where it is indicated that the secondary cell group supports beam failure detection and a primary secondary cell is configured with a reference signal used for TRP-specific beam failure detection, when the secondary cell group is deactivated, the terminal equipment performs TRP-specific beam failure detection of the primary secondary cell.

Reference may be made to what is described in embodiment 6 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 14

The embodiment of this disclosure provides an apparatus for evaluating downlink radio link quality. The apparatus is applicable to a network device and corresponds to the method described in embodiment 7, with identical or related contents being not going to be described herein any further.

FIG. 19 is a schematic diagram of the apparatus for evaluating downlink radio link quality of embodiment 14 of this disclosure. As shown in FIG. 19, an apparatus 1900 includes:
a sixth configuring unit 1901 configured to configure a secondary cell group (SCG) for a terminal equipment;
wherein in a case where it is not indicated that the secondary cell group supports radio link monitoring (RLM), when the secondary cell group is deactivated, the terminal equipment stops radio link monitoring on a primary secondary cell (PSCell); and/or,
in a case where it is not indicated that the secondary cell group supports beam failure detection, or the primary secondary cell is not configured with a reference signal for beam failure detection of a cell, when the secondary cell group is deactivated, the terminal equipment stops beam failure detection on the primary secondary cell; and/or,
in a case where it is not configured that the secondary cell group supports beam failure detection, or the primary secondary cell is not configured with a reference signal for TRP-specific beam failure detection, when the secondary cell group is deactivated, the terminal equipment stops TRP-specific beam failure detection on the primary secondary cell.

Reference may be made to what is described in embodiment 7 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences.

### Embodiment 15

The embodiment of this disclosure provides an apparatus for evaluating downlink radio link quality. The apparatus is applicable to a network device and corresponds to the method described in embodiment 8, with identical or related contents being not going to be described herein any further.

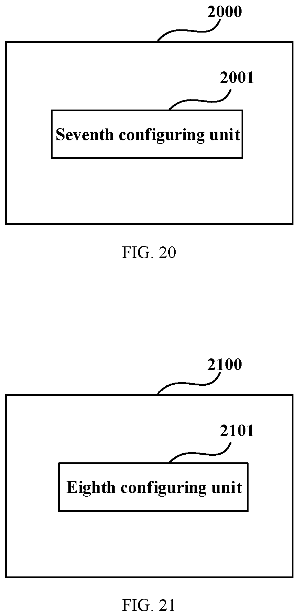

FIG. 20 is a schematic diagram of the apparatus for evaluating downlink radio link quality of embodiment 15 of this disclosure. As shown in FIG. 20, an apparatus 2000 includes:
a seventh configuring unit 2001 configured to configure a secondary cell group (SCG) for a terminal equipment;
wherein in a case where it is indicated that the secondary cell group or a secondary cell (SCell) of the secondary cell group supports radio link monitoring (RLM), when the secondary cell group is deactivated, the terminal equipment performs radio link monitoring on the secondary cell; and/or,
in a case where it is indicated that the secondary cell group or a secondary cell of the secondary cell group supports beam failure detection and the secondary cell is configured with a reference signal for beam failure detection of a cell, when the secondary cell group is deactivated, the terminal equipment performs beam failure detection of the secondary cell; and/or,
in a case where it is indicated that the secondary cell group or a secondary cell of the secondary cell group supports beam failure detection and the secondary cell is configured with a reference signal for TRP-specific beam failure detection, when the secondary cell group is deactivated, the terminal equipment performs TRP-specific beam failure detection of the secondary cell.

FIG. 21 is another schematic diagram of the apparatus for evaluating downlink radio link quality of embodiment 15 of this disclosure. As shown in FIG. 21, an apparatus 2100 includes:
an eighth configuring unit 2101 configured to configure a secondary cell group (SCG) for a terminal equipment;
wherein in a case where it is not indicated that the secondary cell group or a secondary cell (SCell) of the secondary cell group supports radio link monitoring (RLM), when the secondary cell group is deactivated, the terminal equipment stops radio link monitoring on the secondary cell; and/or,
in a case where it is not indicated that the secondary cell group or a secondary cell of the secondary cell group supports beam failure detection or the secondary cell is not configured with a reference signal for beam failure detection of a cell, when the secondary cell group is deactivated, the terminal equipment stops beam failure detection on the secondary cell; and/or,
in a case where it is not indicated that the secondary cell group or a secondary cell of the secondary cell group supports beam failure detection and the secondary cell is not configured with a reference signal for TRP-specific beam failure detection, when the secondary cell group is deactivated, the terminal equipment stops TRP-specific beam failure detection on the secondary cell.

Reference may be made to what is described in embodiment 8 for particular contents, which shall not be repeated herein any further.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality.

### Embodiment 16

The embodiment of this disclosure provides a terminal equipment, including the apparatus for evaluating downlink radio link quality as described in embodiment 9 or embodiment 10 or embodiment 11 or embodiment 12.

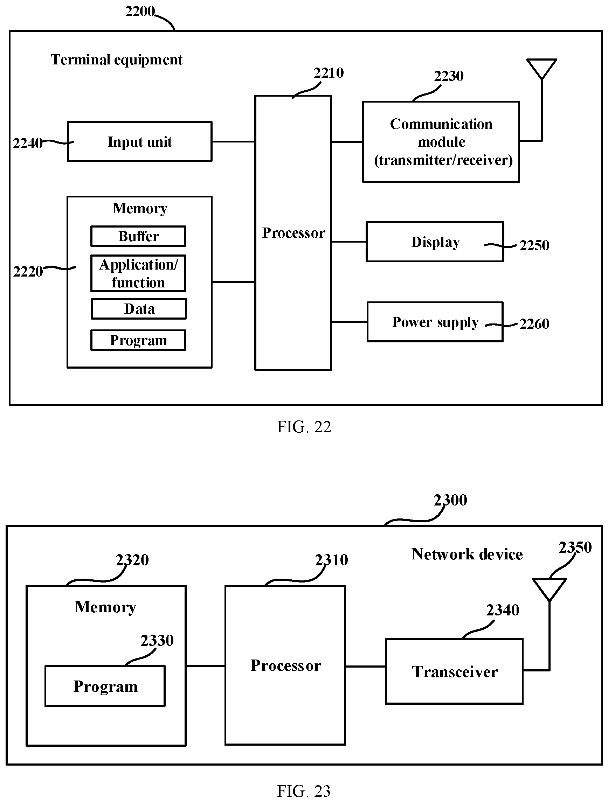

FIG. 22 is a block diagram of a systematic structure of the terminal equipment of embodiment 16 of this disclosure. As shown in FIG. 22, a terminal equipment 2200 may include a processor 2210 and a memory 2220, the memory 2220 storing data and a program and being coupled to the processor 2210. It should be noted that this figure is illustrative only, and other types of structures may also be used, so as to supplement or replace this structure and achieve a telecommunications function or other functions.

In one implementation, the functions of the apparatus for evaluating downlink radio link quality may be integrated into the processor 2210.

Corresponding to embodiment 9, the processor 2210 may be configured to: configure a secondary cell group (SCG); wherein in a case where a network indicates that the secondary cell group supports radio link monitoring (RLM), when the secondary cell group is deactivated, the terminal equipment performs radio link monitoring on a primary secondary cell (PSCell); and/or, in a case where the network indicates that the secondary cell group supports beam failure detection and a primary secondary cell is configured with a reference signal for beam failure detection of a cell, when the secondary cell group is deactivated, the terminal equipment performs beam failure detection of the primary secondary cell; and/or, in a case where the network indicates that the secondary cell group supports beam failure detection and a primary secondary cell is configured with a reference signal for TRP-specific beam failure detection, when the secondary cell group is deactivated, the terminal equipment performs TRP-specific beam failure detection of the primary secondary cell.

Corresponding to embodiment 10, the processor 2210 may be configured to: configure a secondary cell group (SCG); wherein in a case where a network does not indicate that the secondary cell group supports radio link monitoring (RLM), when the secondary cell group is deactivated, the terminal equipment stops radio link monitoring on a primary secondary cell (PSCell); and/or, in a case where the network does not indicate that the secondary cell group supports beam failure detection, or does not configure the primary secondary cell with a reference signal used for beam failure detection of a cell, when the secondary cell group is deactivated, the terminal equipment stops beam failure detection on the primary secondary cell; and/or, in a case where the network does not configure that the secondary cell group supports beam failure detection or does not configure the primary secondary cell with a reference signal for TRP-specific beam failure detection, when the secondary cell group is deactivated, the terminal equipment stops TRP-specific beam failure detection on the primary secondary cell.

Corresponding to embodiment 11, the processor 2210 may be configured to: configure a secondary cell group (SCG); wherein in a case where a network indicates that the secondary cell group or a secondary cell (SCell) of the secondary cell group supports radio link monitoring (RLM), when the secondary cell group is deactivated, the terminal equipment performs radio link monitoring on the secondary cell; and/or, in a case where the network indicates that the secondary cell group or a secondary cell of the secondary cell group supports beam failure detection and configures the secondary cell with a reference signal used for beam failure detection of a cell, when the secondary cell group is deactivated, the terminal equipment performs beam failure detection on the secondary cell; and/or, in a case where the network indicates that the secondary cell group or a secondary cell of the secondary cell group supports beam failure detection and configures the secondary cell with a reference signal used for TRP-specific beam failure detection, when the secondary cell group is deactivated, the terminal equipment performs TRP-specific beam failure detection of the secondary cell.

And/or, the processor 2210 may be configured to: configure a secondary cell group (SCG); wherein in a case where a network does not indicate that the secondary cell group or a secondary cell (SCell) of the secondary cell group supports radio link monitoring (RLM), when the secondary cell group is deactivated, the terminal equipment stops radio link monitoring on the secondary cell; and/or, in a case where the network does not indicate that the secondary cell group or a secondary cell of the secondary cell group supports beam failure detection, or does not configure the secondary cell with a reference signal used for beam failure detection of a cell, when the secondary cell group is deactivated, the terminal equipment stops beam failure detection on the secondary cell; and/or, in a case where the network does not indicate that the secondary cell group or a secondary cell of the secondary cell group supports beam failure detection, or does not configure the secondary cell with a reference signal used for TRP-specific beam failure detection, when the secondary cell group is deactivated, the terminal equipment stops TRP-specific beam failure detection on the secondary cell.

Corresponding to embodiment 12, the processor 2210 may be configured to: for each serving cell configured with beam failure detection, when a first counter is greater than or equal to a preset threshold, in a case where the serving cell is a primary secondary cell, the primary secondary cell is deactivated and beam failure of the primary secondary cell has not been indicated to an upper layer since the primary secondary cell is deactivated, an MAC entity indicates beam failure of the primary secondary cell to the upper layer.

In another implementation, the apparatus for evaluating downlink radio link quality and the processor 2210 may be configured separately; for example, the apparatus for evaluating downlink radio link quality may be configured as a chip connected to the processor 2210, and the functions of the apparatus for evaluating downlink radio link quality are executed under control of the processor 2210.

As shown in FIG. 22, the terminal equipment 2200 may further include a communication module 2230, an input unit 2240, a display 2250, and a power supply 2260; wherein functions of the above components are similar to those in the related art, which shall not be described herein any further. It should be noted that the terminal equipment 2200 does not necessarily include all the parts shown in FIG. 22, and the above components are not necessary. Furthermore, the terminal equipment 2200 may include parts not shown in FIG. 22, and the related art may be referred to.

As shown in FIG. 22, the processor 2210 is sometimes referred to as a controller or an operational control, which may include a microprocessor or other processor devices and/or logic devices. The processor 2210 receives input and controls operations of components of the terminal equipment 2200.

Wherein, the memory 2220 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 2210 may execute programs stored in the memory 2220, so as to realize information storage or processing, etc. Functions of other parts are similar to those of the related art, which shall not be described herein any further. The parts of the terminal equipment 2200 may be realized by specific hardware, firmware, software, or any combination thereof, without departing from the scope of this disclosure.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences;
moreover, in the case where the network indicates that the SCG supports radio link monitoring and/or beam failure detection of the secondary cell, when the SCG is deactivated, radio link monitoring and/or beam failure detection of the secondary cell is/are performed. Therefore, when the SCG is deactivated, the terminal equipment is able to perform radio link monitoring and/or beam failure detection of the secondary cell to evaluate quality of the radio links and/or beams, so that the terminal equipment is able to use radio links and/or beams with relatively good quality for communication, thereby ensuring communication quality.

### Embodiment 17

The embodiment of this disclosure provides a network device, including the apparatus for evaluating downlink radio link quality as described in embodiment 13 or embodiment 14 or embodiment 15.

FIG. 23 is a block diagram of a systematic structure of the network device of embodiment 17 of this disclosure. As shown in FIG. 23, a network device 2300 may include a processor 2310 and a memory 2320, the memory 2320 being coupled to the processor 2310. Wherein, the memory 2320 may store various data, and furthermore, it may store a program 2330 for information processing, and execute the program 2330 under control of the processor 2310, so as to receive various information transmitted by a terminal equipment, and transmit various information to the terminal equipment.

In one implementation, the functions of the apparatus for evaluating downlink radio link quality may be integrated into the processor 2310.

Corresponding to embodiment 13, the processor 2310 may be configured to: configure a secondary cell group (SCG) for a terminal equipment; wherein in a case where it is indicated that the secondary cell group supports radio link monitoring (RLM), when the secondary cell group is deactivated, the terminal equipment performs radio link monitoring on a primary secondary cell (PSCell); and/or, in a case where it is indicated that the secondary cell group supports beam failure detection and a primary secondary cell is configured with a reference signal used for beam failure detection of a cell, when the secondary cell group is deactivated, the terminal equipment performs beam failure detection of the primary secondary cell; and/or, in a case where it is indicated that the secondary cell group supports beam failure detection and a primary secondary cell is configured with a reference signal used for TRP-specific beam failure detection, when the secondary cell group is deactivated, the terminal equipment performs TRP-specific beam failure detection of the primary secondary cell.

Corresponding to embodiment 14, the processor 2310 may be configured to: configure a secondary cell group (SCG) for a terminal equipment; wherein in a case where it is not indicated that the secondary cell group supports radio link monitoring (RLM), when the secondary cell group is deactivated, the terminal equipment stops radio link monitoring on a primary secondary cell (PSCell); and/or, in a case where it is not indicated that the secondary cell group supports beam failure detection, or the primary secondary cell is not configured with a reference signal for beam failure detection of a cell, when the secondary cell group is deactivated, the terminal equipment stops beam failure detection on the primary secondary cell; and/or, in a case where it is not configured that the secondary cell group supports beam failure detection, or the primary secondary cell is not configured with a reference signal for TRP-specific beam failure detection, when the secondary cell group is deactivated, the terminal equipment stops TRP-specific beam failure detection on the primary secondary cell.

Corresponding to embodiment 15, the processor 2310 may be configured to: configure a secondary cell group (SCG) for a terminal equipment; wherein in a case where it is indicated that the secondary cell group or a secondary cell (SCell) of the secondary cell group supports radio link monitoring (RLM), when the secondary cell group is deactivated, the terminal equipment performs radio link monitoring on the secondary cell; and/or, in a case where it is indicated that the secondary cell group or a secondary cell of the secondary cell group supports beam failure detection and the secondary cell is configured with a reference signal for beam failure detection of a cell, when the secondary cell group is deactivated, the terminal equipment performs beam failure detection of the secondary cell; and/or, in a case where it is indicated that the secondary cell group or a secondary cell of the secondary cell group supports beam failure detection and the secondary cell is configured with a reference signal for TRP-specific beam failure detection, when the secondary cell group is deactivated, the terminal equipment performs TRP-specific beam failure detection of the secondary cell.

And/or, the processor 2310 may be configured to: configure a secondary cell group (SCG) for a terminal equipment; wherein in a case where it is not indicated that the secondary cell group or a secondary cell (SCell) of the secondary cell group supports radio link monitoring (RLM), when the secondary cell group is deactivated, the terminal equipment stops radio link monitoring on the secondary cell; and/or, in a case where it is not indicated that the secondary cell group or a secondary cell of the secondary cell group supports beam failure detection or the secondary cell is not configured with a reference signal for beam failure detection of a cell, when the secondary cell group is deactivated, the terminal equipment stops beam failure detection on the secondary cell; and/or, in a case where it is not indicated that the secondary cell group or a secondary cell of the secondary cell group supports beam failure detection and the secondary cell is not configured with a reference signal for TRP-specific beam failure detection, when the secondary cell group is deactivated, the terminal equipment stops TRP-specific beam failure detection on the secondary cell.

In another implementation, the apparatus for evaluating downlink radio link quality and the processor 2310 may be configured separately; for example, the apparatus for evaluating downlink radio link quality may be configured as a chip connected to the processor 2310, and the functions of the apparatus for evaluating downlink radio link quality are executed under control of the processor 2310.

Furthermore, as shown in FIG. 23, the network device 2300 may include a transceiver 2340, and an antenna 2350, etc. Wherein, functions of the above components are similar to those in the related art, and shall not be described herein any further. It should be noted that the network device 2300 does not necessarily include all the parts shown in FIG. 23, and furthermore, the network device 2300 may include parts not shown in FIG. 23, and the related art may be referred to.

It can be seen from the above embodiment that in the case where the network indicates that the SCG supports beam failure detection and the reference signal used for beam failure detection of a cell is configured for the PSCell, when the SCG is deactivated, the beam failure detection of the PSCell is performed. Therefore, when the SCG is deactivated, the terminal equipment is able to perform cell-level beam failure detection to evaluate beam quality, so that the terminal equipment is able to use beams with relatively good radio link quality for communication, thereby ensuring communication quality;
furthermore, in the case where the network indicates that the SCG supports beam failure detection and the reference signal for TRP-specific beam failure detection is configured for the PSCell, when the SCG is deactivated, TRP-specific beam failure detection of the PSCell is performed. Therefore, in the case where a beam failure occurs only in one TRP of the PSCell and the other TRP is still available, when the SCG is deactivated, the terminal equipment will not stop beam failure detection and initiation of a random access procedure, thereby avoiding increase in energy consumption and improving user experiences;
moreover, in the case where the network indicates that the SCG supports radio link monitoring and/or beam failure detection of the secondary cell, when the SCG is deactivated, radio link monitoring and/or beam failure detection of the secondary cell is/are performed. Therefore, when the SCG is deactivated, the terminal equipment is able to perform radio link monitoring and/or beam failure detection of the secondary cell to evaluate quality of the radio links and/or beams, so that the terminal equipment is able to use radio links and/or beams with relatively good quality for communication, thereby ensuring communication quality.

### Embodiment 18

The embodiment of this disclosure provides a communication system, including the terminal equipment described in embodiment 16 and/or the network device described in embodiment 17, and reference may be made to the disclosure contained in embodiments 16 and 17 for details.

For example, reference may be made to FIG. 2 for a structure of the communication system. As shown in FIG. 2, the communication system 100 includes a network device 101 and a terminal equipment 102. The terminal equipment 102 may be identical to the terminal equipment described in embodiment 16, and the network device 101 may be identical to the network device described in embodiment 17, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 14 may either correspond to software modules of procedures of a computer program, or correspond to hardware modules. Such software modules may respectively correspond to the steps shown in FIG. 4. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 14 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 14 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

### Supplement I

1. An apparatus for evaluating downlink radio link quality, applicable to a terminal equipment, the apparatus including:
   a first configuring unit configured to configure a secondary cell group (SCG);
   wherein in a case where a network indicates that the secondary cell group supports radio link monitoring (RLM), when the secondary cell group is deactivated, the terminal equipment performs radio link monitoring on a primary secondary cell (PSCell); and/or,
   in a case where the network indicates that the secondary cell group supports beam failure detection and a primary secondary cell is configured with a reference signal for beam failure detection of a cell, when the secondary cell group is deactivated, the terminal equipment performs beam failure detection of the primary secondary cell; and/or,
   in a case where the network indicates that the secondary cell group supports beam failure detection and a primary secondary cell is configured with a reference signal for TRP-specific beam failure detection, when the secondary cell group is deactivated, the terminal equipment performs TRP-specific beam failure detection of the primary secondary cell.
2. The apparatus according to supplement 1, wherein,
   common configuration or separate configuration indicates that radio link monitoring is supported when the secondary cell group is deactivated or whether radio link monitoring is supported when the secondary cell group is deactivated, and/or common configuration or separate configuration indicates that beam failure detection is supported when the secondary cell group is deactivated or whether beam failure detection is supported when the secondary cell group is deactivated.
3. The apparatus according to supplement 2, wherein,
   the common configuration is used to indicate that the terminal equipment performs radio link monitoring and/or beam failure detection when the SCG is deactivated, or indicate whether the terminal equipment performs radio link monitoring and/or beam failure detection, the beam failure detection including beam failure detection of a cell or TRP-specific beam failure detection.
4. The apparatus according to supplement 2, wherein the separate configuration includes at least one of the following:
   being used to configure, when the secondary cell group is deactivated, indicating whether the terminal equipment performs radio link monitoring and beam failure detection on the primary secondary cell, or indicating that the terminal equipment performs radio link monitoring and beam failure detection on the primary secondary cell;
   being used to configure, when the secondary cell group is deactivated, indicating whether the terminal equipment performs radio link monitoring on the primary secondary cell, or indicating that the terminal equipment performs radio link monitoring on the primary secondary cell;
   being used to configure, when the secondary cell group is deactivated, indicating whether the terminal equipment performs beam failure detection of a cell or TRP-specific beam failure detection on the primary secondary cell, or indicating that the terminal equipment performs beam failure detection of a cell or TRP-specific beam failure detection on the primary secondary cell;
   being used to configure, when the secondary cell group is deactivated, indicating whether the terminal equipment performs beam failure detection of a cell on the primary secondary cell, or indicating that the terminal equipment performs beam failure detection of a cell on the primary secondary cell; and
   being used to configure, when the secondary cell group is deactivated, indicating whether the terminal equipment performs TRP-specific beam failure detection on the primary secondary cell, or indicating that the terminal equipment performs TRP-specific beam failure detection on the primary secondary cell.
5. The apparatus according to any one of supplements 2-4, wherein,
   the configuration indicating whether radio link monitoring (RLM) and/or beam failure detection is supported is included in an *CellGroupConfig* IE.
6. The apparatus according to any one of supplements 1-5, wherein,
   the configuration supporting radio link monitoring (RLM) and beam failure detection is Boolean data or enumerated data.
7. The apparatus according to supplement 1, wherein,
   for the configured secondary cell group, when an upper layer indicates that the secondary cell group is deactivated, an MAC entity applies at least one of the following secondary cell group activation operations:
   activating the primary secondary cell;
   SRS transmission on the primary secondary cell;
   CSI reporting on the primary secondary cell;
   PDCCH monitoring on the primary secondary cell;
   PUCCH transmission on the primary secondary cell;
   if triggered, performing random access on the primary secondary cell; and
   initializing Bj of each logical channel with which the primary secondary cell is associated to be 0.
8. The apparatus according to supplement 1, wherein for the configured secondary cell group, when an upper layer indicates that the secondary cell group is deactivated, an MAC entity performs at least one of the following:
   deactivating all secondary cells (SCells) of the configured secondary cell group;
   deactivating the primary secondary cell; and
   resetting MAC.
9. The apparatus according to supplement 8, wherein the resetting MAC includes at least one of the following:
   stopping all other running timers than a first timer or stopping all running timers;
   stopping an ongoing random access procedure;
   clearing an Msg3 buffer;
   clearing an MSGA buffer;
   cancelling triggered beam failure recovery (BFR); and
   resetting a first counter.
10. The apparatus according to supplement 9, wherein the stopping all other running timers than a first timer or stopping all running timers includes:
   stopping all other running timers than the first timer when the network indicates that the secondary cell group supports radio link monitoring and/or beam failure detection and the primary secondary cell of the secondary cell group is configured with the reference signal for beam failure detection of a cell, the first timer including a TA timer and a beam failure detection timer associated with the primary secondary cell; and/or
   stopping all other running timers than the first timer when the network indicates that the secondary cell group supports radio link monitoring and/or beam failure detection and the primary secondary cell of the secondary cell group is configured with the reference signal for TRP-specific beam failure detection, the first timer including a TA timer and a beam failure detection timer associated with the primary secondary cell or a beam failure detection timer specific for each TRP of the primary secondary cell.
11. The apparatus according to supplement 9, wherein the cancelling triggered beam failure recovery includes at least one of the following:
   cancelling beam failure recovery triggered by the primary secondary cell;
   cancelling beam failure recovery triggered by a BFD-RS set of the primary secondary cell;
   not cancelling beam failure recovery triggered by a BFD-RS set of the primary secondary cell; and
   stopping beam failure detection of one BFD-RS set of the primary secondary cell.
12. The apparatus according to supplement 9 or 11, wherein,
   in the case where the network indicates that the secondary cell group supports radio link monitoring and/or beam failure detection and the reference signal used for TRP-specific beam failure detection is configured for the primary secondary cell of the secondary cell group, beam failure recovery triggered by one BFD-RS set of the primary secondary cell is not cancelled and/or beam failure detection of one BFD-RS set of the primary secondary cell is stopped.
13. The apparatus according to supplement 9 or 11, wherein,
   in the case where the network indicates that the secondary cell group supports radio link monitoring and/or beam failure detection, the reference signal used for TRP-specific beam failure detection is configured for the primary secondary cell of the secondary cell group and one and only one BFD-RS set of the primary secondary cell triggers beam failure recovery, the beam failure recovery triggered by the BFD-RS set of the primary secondary cell is not cancelled and/or beam failure detection of the BFD-RS set of the primary secondary cell is stopped.
14. The apparatus according to supplement 1, wherein the performing radio link monitoring on a primary secondary cell (PSCell) includes:
   performing radio link monitoring on BWPs other than an activated DL BWP by the terminal equipment in a case where the network configures to perform radio link monitoring on a deactivated primary secondary cell.
15. The apparatus according to supplement 14, wherein,
   in the case where the network configures performing radio link monitoring on the deactivated primary secondary cell and no radio link failure of the primary secondary cell or a secondary cell group where the primary secondary cell is located is detected, the terminal equipment performs radio link monitoring on the BWPs other than the activated DL BWP.
16. The apparatus according to supplement 1, wherein in the case where the reference signal used for TRP-specific beam failure detection is configured for the primary secondary cell, when the secondary cell group is deactivated, the performing TRP-specific beam failure detection of the primary secondary cell includes at least one of the following:
   during the deactivation of the secondary cell group, when a BFD-RS set on the primary secondary cell detects a beam failure, stopping beam failure detection of the BFD-RS set by the terminal equipment;
   during the deactivation of the secondary cell group, when a reference signal of a BFD-RS set of the primary secondary cell is reconfigured, recovering beam failure detection of the BFD-RS set by the terminal equipment;
   during the deactivation of the secondary cell group, when beam failure recovery is triggered by two BFD-RS sets on the primary secondary cell and has not been successfully completed, in a case where the MAC layer has not indicated beam failure to the upper layer since the secondary cell group is deactivated, indicating beam failure by the MAC layer to the upper layer; and
   when an activation command of the secondary cell group is received from the network, in a case where beam failure is detected for both BFD-RS sets of the primary secondary cell , performing a random access procedure by the terminal equipment to the secondary cell group.
17. The apparatus according to supplement 1, wherein the performing beam failure detection of the primary secondary cell includes:
   for each serving cell configured with beam failure detection, when a first counter is greater than or equal to a preset threshold, in a case where the serving cell is the primary secondary cell, the secondary cell group is deactivated and a beam failure of the primary secondary cell has not been indicated to the upper layer since the secondary cell group was deactivated, indicating a beam failure of the primary secondary cell by an MAC entity to an upper layer.
18. The apparatus according to supplement 17, wherein the performing beam failure detection of the primary secondary cell further includes:
   indicating a lower layer by the terminal equipment to stop beam failure detection on the primary secondary cell when the network does not configure a first parameter or when an indication from the MAC layer is received.
19. The apparatus according to supplement 18, wherein,
   the lower layer is the MAC layer or a physical layer or a radio frequency (RF) chain.
20. The apparatus according to supplement 17, wherein the performing beam failure detection of the primary secondary cell further includes:
   indicating the beam failure of the primary secondary cell by the MAC entity to the lower layer or indicating the lower layer by the MAC entity to stop beam failure detection on the primary secondary cell.
21. The apparatus according to supplement 20, wherein,
   the lower layer is a physical layer or a radio frequency chain.
22. The apparatus according to supplement 1 or 16, wherein the performing TRP-specific beam failure detection of the primary secondary cell includes:
   when the serving cell is configured with two BFD-RS sets, in a case where beam failure recovery is triggered for two BFD-RS sets of a special cell and has not been successfully completed for each BFD-RS set of the serving cell,
   when the serving cell is the primary secondary cell, a secondary cell group in which the special cell is located is deactivated and a beam failure of the primary secondary cell has not been indicated to the upper layer since the secondary cell group was deactivated, indicating a beam failure of the primary secondary cell by the MAC entity to the upper layer.
23. The apparatus according to supplement 22, wherein the performing TRP-specific beam failure detection of the primary secondary cell further includes:
   indicating the lower layer by the terminal equipment to stop beam failure detection on the primary secondary cell when the network does not configure the first parameter or when an indication is received from the MAC layer.
24. The apparatus according to supplement 23, wherein,
   the lower layer is the MAC layer or a physical layer or a radio frequency chain.
25. The apparatus according to supplement 23, wherein the performing beam failure detection of the primary secondary cell further includes:
   indicating the beam failure of the primary secondary cell to the lower layer or indicating the lower layer to stop beam failure detection on the primary secondary cell, by the MAC entity.
26. The apparatus according to supplement 25, wherein,
   the lower layer is a physical layer or a radio frequency chain.
27. The apparatus according to supplement 22, wherein the performing TRP-specific beam failure detection of the primary secondary cell further includes:
   when the serving cell is configured with two BFD-RS sets, in a case where beam failure recovery is triggered for two BFD-RS sets of a special cell and has not been successfully completed for each BFD-RS set of the serving cell,
   when the serving cell is not the primary secondary cell, or a secondary cell group in which the special cell is located is not deactivated, or a beam failure of the primary secondary cell has been indicated to the upper layer since the secondary cell group is deactivated, initiating a random access procedure by the MAC entity on the primary secondary cell.
28. The apparatus according to supplement 1 or 16, wherein the performing TRP-specific beam failure detection of the primary secondary cell includes:
   when the serving cell is configured with two BFD-RS sets, in a case where a beam failure recovery procedure determines that at least one beam failure recovery has been triggered and not cancelled for one and only one BFD-RS set of a primary secondary cell for each BFD-RS set of the serving cell,
   when the serving cell is the primary secondary cell and the secondary cell group is deactivated, indicating a beam failure of the BFD-RS set of the primary secondary cell by the MAC entity to the upper layer.
29. The apparatus according to supplement 28, wherein the performing TRP-specific beam failure detection of the primary secondary cell further includes:
   when the indication is received, indicating by the terminal equipment that the lower layer stops beam failure detection of the BFD-RS set on the primary secondary cell.
30. The apparatus according to supplement 29, wherein,
   the lower layer is the MAC layer or a physical layer or a radio frequency chain.
31. The apparatus according to supplement 28, wherein the performing TRP-specific beam failure detection of the primary secondary cell further includes:
   when the serving cell is configured with two BFD-RS sets, in a case where a beam failure recovery procedure determines that at least one beam failure recovery has been triggered and not cancelled for one and only one BFD-RS set of a primary secondary cell for each BFD-RS set of the serving cell,
   when the serving cell is the primary secondary cell and the secondary cell group is deactivated, indicating a beam failure of the BFD-RS set of the primary secondary cell by the MAC entity to the lower layer or indicating the primary secondary cell by the MAC entity to stop beam failure detection of the BFD-RS set on the primary secondary cell.
32. The apparatus according to supplement 31, wherein,
   the lower layer is ta physical layer or a radio frequency chain.
33. The apparatus according to supplement 1 or 16, wherein the performing TRP-specific beam failure detection of the primary secondary cell includes:
   when the serving cell is configured with two BFD-RS sets, in a case where a beam failure recovery procedure determines that at least one beam failure recovery has been triggered and not cancelled for one and only one BFD-RS set of a primary secondary cell for each BFD-RS set of the serving cell,
   when the serving cell is not the primary secondary cell, or when the secondary cell group is not deactivated, indicating a multiplexing and assembling procedure by the MAC entity to generate an enhanced BFR MAC CE or trigger an SR.
34. The apparatus according to any of supplements 16, 18, 20, 23, 25, 29 and 31, wherein,
   the stopping beam failure detection includes: stopping beam failure detection by the MAC entity or the lower layer, and/or,
   the recovering beam failure detection includes: recovering beam failure detection by the MAC entity or the lower layer.
35. An apparatus for evaluating downlink radio link quality, applicable to a terminal equipment, the apparatus including:
   a second configuring unit configured to configure a secondary cell group (SCG);
   wherein in a case where a network does not indicate that the secondary cell group supports radio link monitoring (RLM), when the secondary cell group is deactivated, the terminal equipment stops radio link monitoring on a primary secondary cell (PSCell); and/or,
   in a case where the network does not indicate that the secondary cell group supports beam failure detection, or does not configure the primary secondary cell with a reference signal used for beam failure detection of a cell, when the secondary cell group is deactivated, the terminal equipment stops beam failure detection on the primary secondary cell; and/or,
   in a case where the network does not configure that the secondary cell group supports beam failure detection or does not configure the primary secondary cell with a reference signal for TRP-specific beam failure detection, when the secondary cell group is deactivated, the terminal equipment stops TRP-specific beam failure detection on the primary secondary cell.
36. The apparatus according to supplement 35, wherein,
   for the configured secondary cell group, when an upper layer indicates that the secondary cell group is deactivated, an MAC entity applies at least one of the following secondary cell group activation operations:
   activating the primary secondary cell;
   SRS transmission on the primary secondary cell;
   CSI reporting on the primary secondary cell;
   PDCCH monitoring on the primary secondary cell;
   PUCCH transmission on the primary secondary cell;
   if triggered, performing random access on the primary secondary cell; and
   initializing Bj of each logical channel with which the primary secondary cell is associated to be 0.
37. The apparatus according to supplement 35, wherein for the configured secondary cell group, when an upper layer indicates that the secondary cell group is deactivated, an MAC entity performs at least one of the following:
   deactivating all secondary cells (SCells) of the configured secondary cell group;
   deactivating the primary secondary cell; and
   resetting MAC.
38. The apparatus according to supplement 37, wherein the resetting MAC includes at least one of the following:
   stopping all other running timers than a first timer or stopping all running timers;
   stopping an ongoing random access procedure;
   clearing an Msg3 buffer;
   clearing an MSGA buffer;
   cancelling triggered beam failure recovery (BFR); and
   resetting a first counter.
39. The apparatus according to supplement 38, wherein the resetting first counter includes:
   in a case where the network does not configure that the secondary cell group supports beam failure detection and does not configure a reference signal used for TRP-specific beam failure detection, resetting the first counter with which the primary secondary cell group is associated;
      and/or,
   in a case where the network does not configure that the secondary cell group supports beam failure detection and configures a reference signal used for TRP-specific beam failure detection, resetting the first counter with which the primary secondary cell or each BFD-RS set of the primary secondary cell is associated.
40. The apparatus according to any of supplements 35-39, wherein,
   the stopping beam failure detection includes: stopping beam failure detection by the MAC entity or the lower layer, and/or,
   the recovering beam failure detection includes: recovering beam failure detection by the MAC entity or the lower layer.
41. An apparatus for evaluating downlink radio link quality, applicable to a terminal equipment, the apparatus including:
   a third configuring unit configured to configure a secondary cell group (SCG);
   wherein in a case where a network indicates that the secondary cell group or a secondary cell of the secondary cell group supports radio link monitoring (RLM), when the secondary cell group is deactivated, the terminal equipment performs radio link monitoring on the secondary cell; and/or,
   in a case where the network indicates that the secondary cell group or a secondary cell of the secondary cell group supports beam failure detection and configures the secondary cell with a reference signal used for beam failure detection of a cell, when the secondary cell group is deactivated, the terminal equipment performs beam failure detection on the secondary cell; and/or,
   in a case where the network indicates that the secondary cell group or a secondary cell of the secondary cell group supports beam failure detection and configures the secondary cell with a reference signal used for TRP-specific beam failure detection, when the secondary cell group is deactivated, the terminal equipment performs TRP-specific beam failure detection of the secondary cell.
42. An apparatus for evaluating downlink radio link quality, applicable to a terminal equipment, the apparatus including:
   a fourth configuring unit configured to configure a secondary cell group (SCG);
   wherein in a case where a network does not indicate that the secondary cell group or a secondary cell (SCell) of the secondary cell group supports radio link monitoring (RLM), when the secondary cell group is deactivated, the terminal equipment stops radio link monitoring on the secondary cell; and/or,
   in a case where the network does not indicate that the secondary cell group or a secondary cell of the secondary cell group supports beam failure detection, or does not configure the secondary cell with a reference signal used for beam failure detection of a cell, when the secondary cell group is deactivated, the terminal equipment stops beam failure detection on the secondary cell; and/or,
   in a case where the network does not indicate that the secondary cell group or a secondary cell of the secondary cell group supports beam failure detection, or does not configure the secondary cell with a reference signal used for TRP-specific beam failure detection, when the secondary cell group is deactivated, the terminal equipment stops TRP-specific beam failure detection on the secondary cell.
43. An apparatus for evaluating downlink radio link quality, applicable to a terminal equipment,
   wherein for each serving cell configured with beam failure detection, when a first counter is greater than or equal to a preset threshold, in a case where the serving cell is a primary secondary cell, the primary secondary cell is deactivated and beam failure of the primary secondary cell has not been indicated to an upper layer since the primary secondary cell is deactivated, an MAC entity indicates beam failure of the primary secondary cell to the upper layer.
44. The apparatus according to supplement 43, wherein,
   the terminal equipment indicates a lower layer to stop beam failure detection on the primary secondary cell when the network does not configure a first parameter or when an indication from the MAC layer is received.
45. The apparatus according to supplement 44, wherein,
   the lower layer is the MAC layer or a physical layer or a radio frequency (RF) chain.
46. The apparatus according to supplement 43, wherein,
   the MAC entity indicates the beam failure of the primary secondary cell to the lower layer or indicates the lower layer to stop beam failure detection on the primary secondary cell.
47. The apparatus according to supplement 46, wherein,
   the lower layer is a physical layer or a radio frequency chain.
48. An apparatus for evaluating downlink radio link quality, applicable to a network device, the apparatus including:
   a fifth configuring unit configured to configure a secondary cell group (SCG) for a terminal equipment;
   wherein in a case where it is indicated that the secondary cell group supports radio link monitoring (RLM), when the secondary cell group is deactivated, the terminal equipment performs radio link monitoring on a primary secondary cell (PSCell); and/or,
   in a case where it is indicated that the secondary cell group supports beam failure detection and a primary secondary cell is configured with a reference signal used for beam failure detection of a cell, when the secondary cell group is deactivated, the terminal equipment performs beam failure detection of the primary secondary cell; and/or,
   in a case where it is indicated that the secondary cell group supports beam failure detection and a primary secondary cell is configured with a reference signal used for TRP-specific beam failure detection, when the secondary cell group is deactivated, the terminal equipment performs TRP-specific beam failure detection of the primary secondary cell.
49. An apparatus for evaluating downlink radio link quality, applicable to a network device, the apparatus including:
   a sixth configuring unit configured to configure a secondary cell group (SCG) for a terminal equipment;
   wherein in a case where it is not indicated that the secondary cell group supports radio link monitoring (RLM), when the secondary cell group is deactivated, the terminal equipment stops radio link monitoring on a primary secondary cell (PSCell); and/or,
   in a case where it is not indicated that the secondary cell group supports beam failure detection, or the primary secondary cell is not configured with a reference signal for beam failure detection of a cell, when the secondary cell group is deactivated, the terminal equipment stops beam failure detection on the primary secondary cell; and/or,
   in a case where it is not configured that the secondary cell group supports beam failure detection, or the primary secondary cell is not configured with a reference signal for TRP-specific beam failure detection, when the secondary cell group is deactivated, the terminal equipment stops TRP-specific beam failure detection on the primary secondary cell.
50. The apparatus according to supplement 48 or 49, wherein,
   common configuration or separate configuration indicates that radio link monitoring is supported when the secondary cell group is deactivated or whether radio link monitoring is supported when the secondary cell group is deactivated, and/or common configuration or separate configuration indicates that beam failure detection is supported when the secondary cell group is deactivated or whether beam failure detection is supported when the secondary cell group is deactivated.
51. The apparatus according to supplement 50, wherein,
   the common configuration is used to indicate that the terminal equipment performs radio link monitoring and/or beam failure detection when the SCG is deactivated, or indicate whether the terminal equipment performs radio link monitoring and/or beam failure detection, the beam failure detection including beam failure detection of a cell or TRP-specific beam failure detection.
52. The apparatus according to supplement 50, wherein the separate configuration includes at least one of the following:
   being used to configure, when the secondary cell group is deactivated, indicating whether the terminal equipment performs radio link monitoring and beam failure detection on the primary secondary cell, or indicating that the terminal equipment performs radio link monitoring and beam failure detection on the primary secondary cell;
   being used to configure, when the secondary cell group is deactivated, indicating whether the terminal equipment performs radio link monitoring on the primary secondary cell, or indicating that the terminal equipment performs radio link monitoring on the primary secondary cell;
   being used to configure, when the secondary cell group is deactivated, indicating whether the terminal equipment performs beam failure detection of a cell or TRP-specific beam failure detection on the primary secondary cell, or indicating that the terminal equipment performs beam failure detection of a cell or TRP-specific beam failure detection on the primary secondary cell;
   being used to configure, when the secondary cell group is deactivated, indicating whether the terminal equipment performs beam failure detection of a cell on the primary secondary cell, or indicating that the terminal equipment performs beam failure detection of a cell on the primary secondary cell; and
   being used to configure, when the secondary cell group is deactivated, indicating whether the terminal equipment performs TRP-specific beam failure detection on the primary secondary cell, or indicating that the terminal equipment performs TRP-specific beam failure detection on the primary secondary cell.
53. The apparatus according to any one of supplements 50-52, wherein,
   the configuration indicating whether radio link monitoring (RLM) and/or beam failure detection is supported is included in an *CellGroupConfig* IE.
54. The apparatus according to any one of supplements 48-53, wherein,
   the configuration supporting radio link monitoring (RLM) and beam failure detection is Boolean data or enumerated data.
55. An apparatus for evaluating downlink radio link quality, applicable to a network device, the apparatus including:
   a seventh configuring unit configured to configure a secondary cell group (SCG) for a terminal equipment;
   wherein in a case where it is indicated that the secondary cell group or a secondary cell (SCell) of the secondary cell group supports radio link monitoring (RLM), when the secondary cell group is deactivated, the terminal equipment performs radio link monitoring on the secondary cell; and/or,
   in a case where it is indicated that the secondary cell group or a secondary cell of the secondary cell group supports beam failure detection and the secondary cell is configured with a reference signal for beam failure detection of a cell, when the secondary cell group is deactivated, the terminal equipment performs beam failure detection of the secondary cell; and/or,
   in a case where it is indicated that the secondary cell group or a secondary cell of the secondary cell group supports beam failure detection and the secondary cell is configured with a reference signal for TRP-specific beam failure detection, when the secondary cell group is deactivated, the terminal equipment performs TRP-specific beam failure detection of the secondary cell.
56. An apparatus for evaluating downlink radio link quality, applicable to a network device, the apparatus including:
   an eighth configuring unit configured to configure a secondary cell group (SCG) for a terminal equipment;
   wherein in a case where it is not indicated that the secondary cell group or a secondary cell (SCell) of the secondary cell group supports radio link monitoring (RLM), when the secondary cell group is deactivated, the terminal equipment stops radio link monitoring on the secondary cell; and/or,
   in a case where it is not indicated that the secondary cell group or a secondary cell of the secondary cell group supports beam failure detection or the secondary cell is not configured with a reference signal for beam failure detection of a cell, when the secondary cell group is deactivated, the terminal equipment stops beam failure detection on the secondary cell; and/or,
   in a case where it is not indicated that the secondary cell group or a secondary cell of the secondary cell group supports beam failure detection and the secondary cell is not configured with a reference signal for TRP-specific beam failure detection, when the secondary cell group is deactivated, the terminal equipment stops TRP-specific beam failure detection on the secondary cell.
57. A terminal equipment, including the apparatus as described in any of supplements 1-47.
58. A network device, including the apparatus as described in any of supplements 48-56.
59. A communication system, including the terminal equipment as described in supplement 57 and/or the network device as described in supplement 58.

### Supplement II

1. A method for evaluating downlink radio link quality, applicable to a terminal equipment, the method including:
   configuring a secondary cell group (SCG);
   wherein in a case where a network indicates that the secondary cell group supports radio link monitoring (RLM), when the secondary cell group is deactivated, radio link monitoring is performed on a primary secondary cell (PSCell); and/or,
   in a case where the network indicates that the secondary cell group supports beam failure detection and a primary secondary cell is configured with a reference signal for beam failure detection of a cell, when the secondary cell group is deactivated, beam failure detection of the primary secondary cell is performed; and/or,
   in a case where the network indicates that the secondary cell group supports beam failure detection and a primary secondary cell is configured with a reference signal for TRP-specific beam failure detection, when the secondary cell group is deactivated, TRP-specific beam failure detection of the primary secondary cell is performed.
2. The method according to supplement 1, wherein,
   common configuration or separate configuration indicates that radio link monitoring is supported when the secondary cell group is deactivated or whether radio link monitoring is supported when the secondary cell group is deactivated, and/or common configuration or separate configuration indicates that beam failure detection is supported when the secondary cell group is deactivated or whether beam failure detection is supported when the secondary cell group is deactivated.
3. The method according to supplement 2, wherein,
   the common configuration is used to indicate that the terminal equipment performs radio link monitoring and/or beam failure detection when the SCG is deactivated, or indicate whether the terminal equipment performs radio link monitoring and/or beam failure detection, the beam failure detection including beam failure detection of a cell or TRP-specific beam failure detection.
4. The method according to supplement 2, wherein the separate configuration includes at least one of the following:
   being used to configure, when the secondary cell group is deactivated, indicating whether the terminal equipment performs radio link monitoring and beam failure detection on the primary secondary cell, or indicating that the terminal equipment performs radio link monitoring and beam failure detection on the primary secondary cell;
   being used to configure, when the secondary cell group is deactivated, indicating whether the terminal equipment performs radio link monitoring on the primary secondary cell, or indicating that the terminal equipment performs radio link monitoring on the primary secondary cell;
   being used to configure, when the secondary cell group is deactivated, indicating whether the terminal equipment performs beam failure detection of a cell or TRP-specific beam failure detection on the primary secondary cell, or indicating that the terminal equipment performs beam failure detection of a cell or TRP-specific beam failure detection on the primary secondary cell;
   being used to configure, when the secondary cell group is deactivated, indicating whether the terminal equipment performs beam failure detection of a cell on the primary secondary cell, or indicating that the terminal equipment performs beam failure detection of a cell on the primary secondary cell; and
   being used to configure, when the secondary cell group is deactivated, indicating whether the terminal equipment performs TRP-specific beam failure detection on the primary secondary cell, or indicating that the terminal equipment performs TRP-specific beam failure detection on the primary secondary cell.
5. The method according to any one of supplements 2-4, wherein,
   the configuration indicating whether radio link monitoring (RLM) and/or beam failure detection is supported is included in an *CellGroupConfig* IE.
6. The method according to any one of supplements 1-5, wherein,
   the configuration supporting radio link monitoring (RLM) and beam failure detection is Boolean data or enumerated data.
7. The method according to supplement 1, wherein,
   for the configured secondary cell group, when an upper layer indicates that the secondary cell group is deactivated, an MAC entity applies at least one of the following secondary cell group activation operations:
   activating the primary secondary cell;
   SRS transmission on the primary secondary cell;
   CSI reporting on the primary secondary cell;
   PDCCH monitoring on the primary secondary cell;
   PUCCH transmission on the primary secondary cell;
   if triggered, performing random access on the primary secondary cell; and
   initializing Bj of each logical channel with which the primary secondary cell is associated to be 0.
8. The method according to supplement 1, wherein for the configured secondary cell group, when an upper layer indicates that the secondary cell group is deactivated, an MAC entity performs at least one of the following:
   deactivating all secondary cells (SCells) of the configured secondary cell group;
   deactivating the primary secondary cell; and
   resetting MAC.
9. The method according to supplement 8, wherein the resetting MAC includes at least one of the following:
   stopping all other running timers than a first timer or stopping all running timers;
   stopping an ongoing random access procedure;
   clearing an Msg3 buffer;
   clearing an MSGA buffer;
   cancelling triggered beam failure recovery (BFR); and
   resetting a first counter.
10. The method according to supplement 9, wherein the stopping all other running timers than a first timer or stopping all running timers includes:
   stopping all other running timers than the first timer when the network indicates that the secondary cell group supports radio link monitoring and/or beam failure detection and the primary secondary cell of the secondary cell group is configured with the reference signal for beam failure detection of a cell, the first timer including a TA timer and a beam failure detection timer associated with the primary secondary cell; and/or
   stopping all other running timers than the first timer when the network indicates that the secondary cell group supports radio link monitoring and/or beam failure detection and the primary secondary cell of the secondary cell group is configured with the reference signal for TRP-specific beam failure detection, the first timer including a TA timer and a beam failure detection timer associated with the primary secondary cell or a beam failure detection timer specific for each TRP of the primary secondary cell.
11. The method according to supplement 9, wherein the cancelling triggered beam failure recovery includes at least one of the following:
   cancelling beam failure recovery triggered by the primary secondary cell;
   cancelling beam failure recovery triggered by a BFD-RS set of the primary secondary cell;
   not cancelling beam failure recovery triggered by a BFD-RS set of the primary secondary cell; and
   stopping beam failure detection of one BFD-RS set of the primary secondary cell.
12. The method according to supplement 9 or 11, wherein,
   in the case where the network indicates that the secondary cell group supports radio link monitoring and/or beam failure detection and the reference signal used for TRP-specific beam failure detection is configured for the primary secondary cell of the secondary cell group, beam failure recovery triggered one BFD-RS set of the primary secondary cell is not cancelled and/or beam failure detection of one BFD-RS set of the primary secondary cell is stopped.
13. The method according to supplement 9 or 11, wherein,
   in the case where the network indicates that the secondary cell group supports radio link monitoring and/or beam failure detection, the reference signal used for TRP-specific beam failure detection is configured for the primary secondary cell of the secondary cell group and one and only one BFD-RS set of the primary secondary cell triggers beam failure recovery, the beam failure recovery triggered by the BFD-RS set of the primary secondary cell is not cancelled and/or beam failure detection of the BFD-RS set of the primary secondary cell is stopped.
14. The method according to supplement 1, wherein the performing radio link monitoring on a primary secondary cell (PSCell) includes:
   performing radio link monitoring on BWPs other than an activated DL BWP by the terminal equipment in a case where the network configures to perform radio link monitoring on a deactivated primary secondary cell.
15. The method according to supplement 14, wherein,
   in the case where the network configures performing radio link monitoring on the deactivated primary secondary cell and no radio link failure of the primary secondary cell or a secondary cell group where the primary secondary cell is located is detected, the terminal equipment performs radio link monitoring on the BWPs other than the activated DL BWP.
16. The method according to supplement 1, wherein in the case where the reference signal used for TRP-specific beam failure detection is configured for the primary secondary cell, when the secondary cell group is deactivated, the performing TRP-specific beam failure detection of the primary secondary cell includes at least one of the following:
   during the deactivation of the secondary cell group, when a BFD-RS set on the primary secondary cell detects a beam failure, stopping beam failure detection of the BFD-RS set by the terminal equipment;
   during the deactivation of the secondary cell group, in reconfiguring a reference signal of a BFD-RS set of the primary secondary cell, recovering beam failure detection of the BFD-RS set by the terminal equipment;
   during the deactivation of the secondary cell group, when beam failure recovery is triggered by two BFD-RS sets on the primary secondary cell and has not been successfully completed, in a case where the MAC layer has not indicated beam failure to the upper layer since the secondary cell group is deactivated, indicating beam failure by the MAC layer to the upper layer; and
   when an activation command of the secondary cell group is received from the network, in a case where beam failure is detected for both BFD-RS sets of the primary secondary cell , performing a random access procedure by the terminal equipment to the secondary cell group.
17. The method according to supplement 1, wherein the performing beam failure detection of the primary secondary cell includes:
   for each serving cell configured with beam failure detection, when a first counter is greater than or equal to a preset threshold, in a case where the serving cell is the primary secondary cell, the secondary cell group is deactivated and a beam failure of the primary secondary cell has not been indicated to the upper layer since the secondary cell group was deactivated, indicating a beam failure of the primary secondary cell by an MAC entity to an upper layer.
18. The method according to supplement 17, wherein the performing beam failure detection of the primary secondary cell further includes:
   indicating a lower layer by the terminal equipment to stop beam failure detection on the primary secondary cell when the network does not configure a first parameter or when an indication from the MAC layer is received.
19. The method according to supplement 18, wherein,
   the lower layer is the MAC layer or a physical layer or a radio frequency (RF) chain.
20. The method according to supplement 17, wherein the performing beam failure detection of the primary secondary cell further includes:
   indicating the beam failure of the primary secondary cell by the MAC entity to the lower layer or indicating the lower layer by the MAC entity to stop beam failure detection on the primary secondary cell.
21. The method according to supplement 20, wherein,
   the lower layer is a physical layer or a radio frequency chain.
22. The method according to supplement 1 or 16, wherein the performing TRP-specific beam failure detection of the primary secondary cell includes:
   when the serving cell is configured with two BFD-RS sets, in a case where beam failure recovery is triggered for two BFD-RS sets of a special cell and has not been successfully completed for each BFD-RS set of the serving cell,
   when the serving cell is the primary secondary cell, a secondary cell group in which the special cell is located is deactivated and a beam failure of the primary secondary cell has not been indicated to the upper layer since the secondary cell group was deactivated, indicating a beam failure of the primary secondary cell by the MAC entity to the upper layer.
23. The method according to supplement 22, wherein the performing TRP-specific beam failure detection of the primary secondary cell further includes:
   indicating the lower layer by the terminal equipment to stop beam failure detection on the primary secondary cell when the network does not configure the first parameter or when an indication is received from the MAC layer.
24. The method according to supplement 23, wherein,
   the lower layer is the MAC layer or a physical layer or a radio frequency chain.
25. The method according to supplement 23, wherein the performing beam failure detection of the primary secondary cell further includes:
   indicating the beam failure of the primary secondary cell to the lower layer or indicating the lower layer to stop beam failure detection on the primary secondary cell, by the MAC entity.
26. The method according to supplement 25, wherein,
   the lower layer is a physical layer or a radio frequency chain.
27. The method according to supplement 22, wherein the performing TRP-specific beam failure detection of the primary secondary cell further includes:
   when the serving cell is configured with two BFD-RS sets, in a case where beam failure recovery is triggered for two BFD-RS sets of a special cell and has not been successfully completed for each BFD-RS set of the serving cell,
   when the serving cell is not the primary secondary cell, or a secondary cell group in which the special cell is located is not deactivated, or a beam failure of the primary secondary cell has been indicated to the upper layer since the secondary cell group is deactivated, initiating a random access procedure by the MAC entity on the primary secondary cell.
28. The method according to supplement 1 or 16, wherein the performing TRP-specific beam failure detection of the primary secondary cell includes:
   when the serving cell is configured with two BFD-RS sets, in a case where a beam failure recovery procedure determines that at least one beam failure recovery has been triggered and not cancelled for one and only one BFD-RS set of a primary secondary cell for each BFD-RS set of the serving cell,
   when the serving cell is the primary secondary cell and the secondary cell group is deactivated, indicating a beam failure of the BFD-RS set of the primary secondary cell by the MAC entity to the upper layer.
29. The method according to supplement 28, wherein the performing TRP-specific beam failure detection of the primary secondary cell further includes:
   when the indication is received, indicating by the terminal equipment that the lower layer stops beam failure detection of the BFD-RS set on the primary secondary cell.
30. The method according to supplement 29, wherein,
   the lower layer is the MAC layer or a physical layer or a radio frequency chain.
31. The method according to supplement 28, wherein the performing TRP-specific beam failure detection of the primary secondary cell further includes:
   when the serving cell is configured with two BFD-RS sets, in a case where a beam failure recovery procedure determines that at least one beam failure recovery has been triggered and not cancelled for one and only one BFD-RS set of a primary secondary cell for each BFD-RS set of the serving cell,
   when the serving cell is the primary secondary cell and the secondary cell group is deactivated, indicating a beam failure of the BFD-RS set of the primary secondary cell by the MAC entity to the lower layer or indicating the primary secondary cell by the MAC entity to stop beam failure detection of the BFD-RS set on the primary secondary cell.
32. The method according to supplement 31, wherein,
   the lower layer is ta physical layer or a radio frequency chain.
33. The method according to supplement 1 or 16, wherein the performing TRP-specific beam failure detection of the primary secondary cell includes:
   when the serving cell is configured with two BFD-RS sets, in a case where a beam failure recovery procedure determines that at least one beam failure recovery has been triggered and not cancelled for one and only one BFD-RS set of a primary secondary cell for each BFD-RS set of the serving cell,
   when the serving cell is not the primary secondary cell, or when the secondary cell group is not deactivated, indicating a multiplexing and assembling procedure by the MAC entity to generate an enhanced BFR MAC CE or trigger an SR.
34. The method according to any of supplements 16, 18, 20, 23, 25, 29 and 31, wherein,
   the stopping beam failure detection includes: stopping beam failure detection by the MAC entity or the lower layer, and/or,
   the recovering beam failure detection includes: recovering beam failure detection by the MAC entity or the lower layer.
35. A method for evaluating downlink radio link quality, applicable to a terminal equipment, the method including:
   configuring a secondary cell group (SCG);
   wherein in a case where a network does not indicate that the secondary cell group supports radio link monitoring (RLM), when the secondary cell group is deactivated, radio link monitoring on a primary secondary cell (PSCell) is stopped; and/or,
   in a case where the network does not indicate that the secondary cell group supports beam failure detection, or does not configure the primary secondary cell with a reference signal used for beam failure detection of a cell, when the secondary cell group is deactivated, beam failure detection on the primary secondary cell is stopped; and/or,
   in a case where the network does not configure that the secondary cell group supports beam failure detection or does not configure the primary secondary cell with a reference signal for TRP-specific beam failure detection, when the secondary cell group is deactivated, TRP-specific beam failure detection on the primary secondary cell is stopped.
36. The method according to supplement 35, wherein,
   for the configured secondary cell group, when an upper layer indicates that the secondary cell group is deactivated, an MAC entity applies at least one of the following secondary cell group activation operations:
   activating the primary secondary cell;
   SRS transmission on the primary secondary cell;
   CSI reporting on the primary secondary cell;
   PDCCH monitoring on the primary secondary cell;
   PUCCH transmission on the primary secondary cell;
   if triggered, performing random access on the primary secondary cell; and
   initializing Bj of each logical channel with which the primary secondary cell is associated to be 0.
37. The method according to supplement 35, wherein for the configured secondary cell group, when an upper layer indicates that the secondary cell group is deactivated, an MAC entity performs at least one of the following:
   deactivating all secondary cells (SCells) of the configured secondary cell group;
   deactivating the primary secondary cell; and
   resetting MAC.
38. The method according to supplement 37, wherein the resetting MAC includes at least one of the following:
   stopping all other running timers than a first timer or stopping all running timers;
   stopping an ongoing random access procedure;
   clearing an Msg3 buffer;
   clearing an MSGA buffer;
   cancelling triggered beam failure recovery (BFR); and
   resetting a first counter.
39. The method according to supplement 38, wherein the resetting first counter includes:
   in a case where the network does not configure that the secondary cell group supports beam failure detection and does not configure a reference signal used for TRP-specific beam failure detection, resetting the first counter with which the primary secondary cell group is associated;
      and/or,
   in a case where the network does not configure that the secondary cell group supports beam failure detection and configures a reference signal used for TRP-specific beam failure detection, resetting the first counter with which the primary secondary cell or each BFD-RS set of the primary secondary cell is associated.
40. The method according to any of supplements 35-39, wherein,
   the stopping beam failure detection includes: stopping beam failure detection by the MAC entity or the lower layer, and/or,
   the recovering beam failure detection includes: recovering beam failure detection by the MAC entity or the lower layer.
41. A method for evaluating downlink radio link quality, applicable to a terminal equipment, the method including:
   configuring a secondary cell group (SCG);
   wherein in a case where a network indicates that the secondary cell group or a secondary cell of the secondary cell group supports radio link monitoring (RLM), when the secondary cell group is deactivated, radio link monitoring is performed on the secondary cell; and/or,
   in a case where the network indicates that the secondary cell group or a secondary cell of the secondary cell group supports beam failure detection and configures the secondary cell with a reference signal used for beam failure detection of a cell, when the secondary cell group is deactivated, beam failure detection is performed on the secondary cell; and/or,
   in a case where the network indicates that the secondary cell group or a secondary cell of the secondary cell group supports beam failure detection and configures the secondary cell with a reference signal used for TRP-specific beam failure detection, when the secondary cell group is deactivated, TRP-specific beam failure detection of the secondary cell is performed.
42. A method for evaluating downlink radio link quality, applicable to a terminal equipment, the method including:
   configuring a secondary cell group (SCG);
   wherein in a case where a network does not indicate that the secondary cell group or a secondary cell (SCell) of the secondary cell group supports radio link monitoring (RLM), when the secondary cell group is deactivated, radio link monitoring on the secondary cell is stopped; and/or,
   in a case where the network does not indicate that the secondary cell group or a secondary cell of the secondary cell group supports beam failure detection, or does not configure the secondary cell with a reference signal used for beam failure detection of a cell, when the secondary cell group is deactivated, beam failure detection on the secondary cell is stopped; and/or,
   in a case where the network does not indicate that the secondary cell group or a secondary cell of the secondary cell group supports beam failure detection, or does not configure the secondary cell with a reference signal used for TRP-specific beam failure detection, when the secondary cell group is deactivated, TRP-specific beam failure detection on the secondary cell is stopped.
43. A method for evaluating downlink radio link quality, applicable to a terminal equipment,
   wherein for each serving cell configured with beam failure detection, when a first counter is greater than or equal to a preset threshold, in a case where the serving cell is a primary secondary cell, the primary secondary cell is deactivated and beam failure of the primary secondary cell has not been indicated to an upper layer since the primary secondary cell is deactivated, an MAC entity indicates beam failure of the primary secondary cell to the upper layer.
44. The method according to supplement 43, wherein the method further includes:
   indicating a lower layer by the terminal equipment to stop beam failure detection on the primary secondary cell when the network does not configure a first parameter or when an indication from the MAC layer is received.
45. The method according to supplement 44, wherein,
   the lower layer is the MAC layer or a physical layer or a radio frequency (RF) chain.
46. The method according to supplement 43, wherein,
   the MAC entity indicates the beam failure of the primary secondary cell to the lower layer or indicates the lower layer to stop beam failure detection on the primary secondary cell.
47. The method according to supplement 46, wherein,
   the lower layer is a physical layer or a radio frequency chain.
48. A method for evaluating downlink radio link quality, applicable to a network device, the method including:
   configuring a secondary cell group (SCG) for a terminal equipment;
   wherein in a case where it is indicated that the secondary cell group supports radio link monitoring (RLM), when the secondary cell group is deactivated, the terminal equipment performs radio link monitoring on a primary secondary cell (PSCell); and/or,
   in a case where it is indicated that the secondary cell group supports beam failure detection and a primary secondary cell is configured with a reference signal used for beam failure detection of a cell, when the secondary cell group is deactivated, the terminal equipment performs beam failure detection of the primary secondary cell; and/or,
   in a case where it is indicated that the secondary cell group supports beam failure detection and a primary secondary cell is configured with a reference signal used for TRP-specific beam failure detection, when the secondary cell group is deactivated, the terminal equipment performs TRP-specific beam failure detection of the primary secondary cell.
49. A method for evaluating downlink radio link quality, applicable to a network device, the method including:
   configuring a secondary cell group (SCG) for a terminal equipment;
   wherein in a case where it is not indicated that the secondary cell group supports radio link monitoring (RLM), when the secondary cell group is deactivated, the terminal equipment stops radio link monitoring on a primary secondary cell (PSCell); and/or,
   in a case where it is not indicated that the secondary cell group supports beam failure detection, or the primary secondary cell is not configured with a reference signal for beam failure detection of a cell, when the secondary cell group is deactivated, the terminal equipment stops beam failure detection on the primary secondary cell; and/or,
   in a case where it is not configured that the secondary cell group supports beam failure detection, or the primary secondary cell is not configured with a reference signal for TRP-specific beam failure detection, when the secondary cell group is deactivated, the terminal equipment stops TRP-specific beam failure detection on the primary secondary cell.
50. The method according to supplement 48 or 49, wherein,
   common configuration or separate configuration indicates that radio link monitoring is supported when the secondary cell group is deactivated or whether radio link monitoring is supported when the secondary cell group is deactivated, and/or common configuration or separate configuration indicates that beam failure detection is supported when the secondary cell group is deactivated or whether beam failure detection is supported when the secondary cell group is deactivated.
51. The method according to supplement 50, wherein,
   the common configuration is used to indicate that the terminal equipment performs radio link monitoring and/or beam failure detection when the SCG is deactivated, or indicate whether the terminal equipment performs radio link monitoring and/or beam failure detection, the beam failure detection including beam failure detection of a cell or TRP-specific beam failure detection.
52. The method according to supplement 50, wherein the separate configuration includes at least one of the following:
   being used to configure, when the secondary cell group is deactivated, indicating whether the terminal equipment performs radio link monitoring and beam failure detection on the primary secondary cell, or indicating that the terminal equipment performs radio link monitoring and beam failure detection on the primary secondary cell;
   being used to configure, when the secondary cell group is deactivated, indicating whether the terminal equipment performs radio link monitoring on the primary secondary cell, or indicating that the terminal equipment performs radio link monitoring on the primary secondary cell;
   being used to configure, when the secondary cell group is deactivated, indicating whether the terminal equipment performs beam failure detection of a cell or TRP-specific beam failure detection on the primary secondary cell, or indicating that the terminal equipment performs beam failure detection of a cell or TRP-specific beam failure detection on the primary secondary cell;
   being used to configure, when the secondary cell group is deactivated, indicating whether the terminal equipment performs beam failure detection of a cell on the primary secondary cell, or indicating that the terminal equipment performs beam failure detection of a cell on the primary secondary cell; and
   being used to configure, when the secondary cell group is deactivated, indicating whether the terminal equipment performs TRP-specific beam failure detection on the primary secondary cell, or indicating that the terminal equipment performs TRP-specific beam failure detection on the primary secondary cell.
53. The method according to any one of supplements 50-52, wherein,
   the configuration indicating whether radio link monitoring (RLM) and/or beam failure detection is supported is included in an *CellGroupConfig* IE.
54. The method according to any one of supplements 48-53, wherein,
   the configuration supporting radio link monitoring (RLM) and beam failure detection is Boolean data or enumerated data.
55. A method for evaluating downlink radio link quality, applicable to a network device, the method including:
   configuring a secondary cell group (SCG) for a terminal equipment;
   wherein in a case where it is indicated that the secondary cell group or a secondary cell (SCell) of the secondary cell group supports radio link monitoring (RLM), when the secondary cell group is deactivated, the terminal equipment performs radio link monitoring on the secondary cell; and/or,
   in a case where it is indicated that the secondary cell group or a secondary cell of the secondary cell group supports beam failure detection and the secondary cell is configured with a reference signal for beam failure detection of a cell, when the secondary cell group is deactivated, the terminal equipment performs beam failure detection of the secondary cell; and/or,
   in a case where it is indicated that the secondary cell group or a secondary cell of the secondary cell group supports beam failure detection and the secondary cell is configured with a reference signal for TRP-specific beam failure detection, when the secondary cell group is deactivated, the terminal equipment performs TRP-specific beam failure detection of the secondary cell.
56. A method for evaluating downlink radio link quality, applicable to a network device, the method including:
   configuring a secondary cell group (SCG) for a terminal equipment;
   wherein in a case where it is not indicated that the secondary cell group or a secondary cell (SCell) of the secondary cell group supports radio link monitoring (RLM), when the secondary cell group is deactivated, the terminal equipment stops radio link monitoring on the secondary cell; and/or,
   in a case where it is not indicated that the secondary cell group or a secondary cell of the secondary cell group supports beam failure detection or the secondary cell is not configured with a reference signal for beam failure detection of a cell, when the secondary cell group is deactivated, the terminal equipment stops beam failure detection on the secondary cell; and/or,
   in a case where it is not indicated that the secondary cell group or a secondary cell of the secondary cell group supports beam failure detection and the secondary cell is not configured with a reference signal for TRP-specific beam failure detection, when the secondary cell group is deactivated, the terminal equipment stops TRP-specific beam failure detection on the secondary cell.

## Claims

1. An apparatus for evaluating downlink radio link quality, applicable to a terminal equipment, the apparatus comprising:
a first configuring unit configured to configure a secondary cell group (SCG);
wherein in a case where a network indicates that the secondary cell group supports radio link monitoring (RLM), when the secondary cell group is deactivated, the terminal equipment performs radio link monitoring on a primary secondary cell (PSCell); and/or,
in a case where the network indicates that the secondary cell group supports beam failure detection and the primary secondary cell is configured with a reference signal for beam failure detection of a cell, when the secondary cell group is deactivated, the terminal equipment performs beam failure detection of the primary secondary cell; and/or,
in a case where the network indicates that the secondary cell group supports beam failure detection and the primary secondary cell is configured with a reference signal for TRP-specific beam failure detection, when the secondary cell group is deactivated, the terminal equipment performs TRP-specific beam failure detection of the primary secondary cell.

2. The apparatus according to claim 1, wherein,
common configuration or separate configuration indicates that radio link monitoring is supported when the secondary cell group is deactivated or whether radio link monitoring is supported when the secondary cell group is deactivated, and/or common configuration or separate configuration indicates that beam failure detection is supported when the secondary cell group is deactivated or whether beam failure detection is supported when the secondary cell group is deactivated.

3. The apparatus according to claim 1, wherein for the configured secondary cell group, when an upper layer indicates that the secondary cell group is deactivated, an MAC entity will perform at least one of the following:
deactivating all secondary cells (SCells) of the configured secondary cell group;
deactivating the primary secondary cell; and
resetting MAC.

4. The apparatus according to claim 3, wherein the resetting MAC comprises at least one of the following:
stopping all other running timers than a first timer or stopping all running timers;
stopping an ongoing random access procedure;
clearing an Msg3 buffer;
clearing an MSGA buffer;
cancelling triggered beam failure recovery (BFR); and
resetting a first counter.

5. The apparatus according to claim 4, wherein the stopping all other running timers than a first timer or stopping all running timers comprises:
stopping all other running timers than the first timer when the network indicates that the secondary cell group supports radio link monitoring and/or beam failure detection and the primary secondary cell of the secondary cell group is configured with the reference signal for beam failure detection of a cell, the first timer comprising a TA timer and a beam failure detection timer associated with the primary secondary cell; and/or
stopping all other running timers than the first timer when the network indicates that the secondary cell group supports radio link monitoring and/or beam failure detection and the primary secondary cell of the secondary cell group is configured with the reference signal for TRP-specific beam failure detection, the first timer comprising a TA timer and a beam failure detection timer associated with the primary secondary cell or a beam failure detection timer specific for each TRP of the primary secondary cell.

6. The apparatus according to claim 4, wherein the cancelling triggered beam failure recovery comprises at least one of the following:
cancelling beam failure recovery triggered by the primary secondary cell;
cancelling beam failure recovery triggered by a BFD-RS set of the primary secondary cell;
not cancelling beam failure recovery triggered by a BFD-RS set of the primary secondary cell; and
stopping beam failure detection of one BFD-RS set of the primary secondary cell.

7. The apparatus according to claim 1, wherein the performing radio link monitoring on a primary secondary cell (PSCell) comprises:
performing radio link monitoring on BWPs other than an activated DL BWP by the terminal equipment in a case where the network configures to perform radio link monitoring on a deactivated primary secondary cell.

8. The apparatus according to claim 1, wherein the performing beam failure detection of the primary secondary cell comprises:
for each serving cell configured with beam failure detection, when a first counter is greater than or equal to a preset threshold, in a case where the serving cell is the primary secondary cell, the secondary cell group is deactivated and a beam failure of the primary secondary cell has not been indicated to the upper layer since the secondary cell group was deactivated, indicating a beam failure of the primary secondary cell by an MAC entity to an upper layer.

9. The apparatus according to claim 8, wherein the performing beam failure detection of the primary secondary cell further comprises:
indicating a lower layer by the terminal equipment to stop beam failure detection on the primary secondary cell when the network does not configure a first parameter or when an indication from the MAC layer is received.

10. The apparatus according to claim 8, wherein the performing beam failure detection of the primary secondary cell further comprises:
indicating the beam failure of the primary secondary cell by the MAC entity to the lower layer or indicating the lower layer by the MAC entity to stop beam failure detection on the primary secondary cell.

11. The apparatus according to claim 1, wherein the performing TRP-specific beam failure detection of the primary secondary cell comprises:
when the serving cell is configured with two BFD-RS sets, for each BFD-RS set of the serving cell, in a case where beam failure recovery is triggered for two BFD-RS sets of a special cell and has not been successfully completed,
when the serving cell is the primary secondary cell, a secondary cell group in which the special cell is located is deactivated and a beam failure of the primary secondary cell has not been indicated to the upper layer since the secondary cell group was deactivated, indicating a beam failure of the primary secondary cell by the MAC entity to the upper layer.

12. The apparatus according to claim 11, wherein the performing TRP-specific beam failure detection of the primary secondary cell further comprises:
indicating the lower layer by the terminal equipment to stop beam failure detection on the primary secondary cell when the network does not configure the first parameter or when an indication is received from the MAC layer.

13. The apparatus according to claim 12, wherein the performing beam failure detection of the primary secondary cell further comprises:
indicating the beam failure of the primary secondary cell to the lower layer or indicating the lower layer to stop beam failure detection on the primary secondary cell, by the MAC entity.

14. The apparatus according to claim 11, wherein the performing TRP-specific beam failure detection of the primary secondary cell further comprises:
when the serving cell is configured with two BFD-RS sets, for each BFD-RS set of the serving cell, in a case where beam failure recovery is triggered for two BFD-RS sets of a special cell and has not been successfully completed,
when the serving cell is not the primary secondary cell, or a secondary cell group in which the special cell is located is not deactivated, or a beam failure of the primary secondary cell has been indicated to the upper layer since the secondary cell group is deactivated, initiating a random access procedure by the MAC entity on the primary secondary cell.

15. The apparatus according to claim 1, wherein the performing TRP-specific beam failure detection of the primary secondary cell comprises:
when the serving cell is configured with two BFD-RS sets, for each BFD-RS set of the serving cell, in a case where at least one piece of beam failure recovery is triggered for one and only one BFD-RS set of a primary secondary cell and has not been cancelled in a beam failure recovery procedure,
when the serving cell is the primary secondary cell and the secondary cell group is deactivated, indicating a beam failure of the BFD-RS set of the primary secondary cell by the MAC entity to the upper layer.

16. The apparatus according to claim 15, wherein the performing TRP-specific beam failure detection of the primary secondary cell further comprises:
when the serving cell is configured with two BFD-RS sets, for each BFD-RS set of the serving cell, in a case where at least one piece of beam failure recovery is triggered for one and only one BFD-RS set of a primary secondary cell and has not been cancelled in a beam failure recovery procedure,
when the serving cell is the primary secondary cell and the secondary cell group is deactivated, indicating a beam failure of the BFD-RS set of the primary secondary cell by the MAC entity to the lower layer or indicating the primary secondary cell by the MAC entity to stop beam failure detection of the BFD-RS set on the primary secondary cell.

17. The apparatus according to claim 1, wherein the performing TRP-specific beam failure detection of the primary secondary cell comprises:
when the serving cell is configured with two BFD-RS sets, for each BFD-RS set of the serving cell, in a case where at least one piece of beam failure recovery is triggered for one and only one BFD-RS set of a primary secondary cell and has not been cancelled in a beam failure recovery procedure,
when the serving cell is not the primary secondary cell, or when the secondary cell group is not deactivated, indicating a multiplexing and assembling procedure by the MAC entity to generate an enhanced BFR MAC CE or trigger an SR.

18. An apparatus for evaluating downlink radio link quality, applicable to a terminal equipment, the apparatus comprising:
a second configuring unit configured to configure a secondary cell group (SCG);
wherein in a case where a network does not indicate that the secondary cell group supports radio link monitoring (RLM), when the secondary cell group is deactivated, the terminal equipment stops radio link monitoring on a primary secondary cell (PSCell); and/or,
in a case where the network does not indicate that the secondary cell group supports beam failure detection, or does not configure the primary secondary cell with a reference signal used for beam failure detection of a cell, when the secondary cell group is deactivated, the terminal equipment stops beam failure detection on the primary secondary cell; and/or,
in a case where the network does not configure that the secondary cell group supports beam failure detection or does not configure the primary secondary cell with a reference signal for TRP-specific beam failure detection, when the secondary cell group is deactivated, the terminal equipment stops TRP-specific beam failure detection on the primary secondary cell.

19. An apparatus for evaluating downlink radio link quality, applicable to a network device, the apparatus comprising:
a sixth configuring unit configured to configure a secondary cell group (SCG) for a terminal equipment;
wherein in a case where it is not indicated that the secondary cell group supports radio link monitoring (RLM), when the secondary cell group is deactivated, the terminal equipment stops radio link monitoring on a primary secondary cell (PSCell); and/or,
in a case where it is not indicated that the secondary cell group supports beam failure detection, or the primary secondary cell is not configured with a reference signal for beam failure detection of a cell, when the secondary cell group is deactivated, the terminal equipment stops beam failure detection on the primary secondary cell; and/or,
in a case where it is not configured that the secondary cell group supports beam failure detection, or the primary secondary cell is not configured with a reference signal for TRP-specific beam failure detection, when the secondary cell group is deactivated, the terminal equipment stops TRP-specific beam failure detection on the primary secondary cell.

20. The apparatus according to claim 19, wherein,
common configuration or separate configuration indicates that radio link monitoring is supported when the secondary cell group is deactivated or whether radio link monitoring is supported when the secondary cell group is deactivated, and/or common configuration or separate configuration indicates that beam failure detection is supported when the secondary cell group is deactivated or whether beam failure detection is supported when the secondary cell group is deactivated.
